# EUROPÄISCHE PATENTSCHRIFT

(11) **EP 3 785 847 B1**
(45) Veröffentlichungstag und Bekanntmachung des Hinweises auf die Patenterteilung: **09.08.2023**
(21) Anmeldenummer: 20192576.5
(22) Anmeldetag: 25.08.2020
(51) Int. Cl.: B23Q 5/14, B23Q 17/09

(54) **VORRICHTUNG FÜR EIN WERKZEUGEINSTELL- UND/ODER WERKZEUGMESSGERÄT, WERKZEUGEINSTELL- UND/ODER WERKZEUGMESSGERÄT UND VERFAHREN ZUM BETRIEB DER VORRICHTUNG FÜR EIN WERKZEUGEINSTELL- UND/ODER WERKZEUGMESSGERÄT**
ASSEMBLY FOR A TOOL ADJUSTMENT AND/OR METERING DEVICE, TOOL ADJUSTMENT AND/OR METERING DEVICE AND METHOD FOR OPERATING THE ASSEMBLY FOR A TOOL ADJUSTMENT AND/OR METERING DEVICE
DISPOSITIF POUR UNA APPAREIL DE RÉGLAGE D'OUTILS ET/OU DE MESURE D'OUTILS, APPAREIL DE RÉGLAGE D'OUTILS ET/OU DE MESURE D'OUTILS ET PROCÉDÉ DE FONCTIONNEMENT DU DISPOSITIF DE RÉGLAGE D'OUTILS ET/OU DE MESURE D'OUTILS

(30) Priorität: 26.08.2019 DE 102019122785
(43) Veröffentlichungstag der Anmeldung: 03.03.2021
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE); Pfau, Christian, 74379 Ingersheim (DE); Huck, Florian, 74385 Pleidelsheim (DE)
(74) Vertreter: Daub, Thomas

(56) Entgegenhaltungen:
- DE-A1-102011 008 513
- DE-A1-102011 078 798
- DE-U1- 8 712 091

## Beschreibung

### Stand der Technik

Die Erfindung betrifft eine Vorrichtung für ein Werkzeugeinstell- und/ oder Werkzeugmessgerät, nach dem Oberbegriff des Anspruchs 1, ein Werkzeugeinstell- und/oder Werkzeugmessgerät nach Anspruch 9 und ein Verfahren zum Betrieb der Vorrichtung für ein Werkzeugeinstell- und/ oder Werkzeugmessgerät nach dem Oberbegriff des Anspruchs 11.

Es ist bereits eine Vorrichtung für ein Werkzeugeinstell- und/oder Werkzeugmessgerät, mit einer Trägereinheit und mit einer von der Trägereinheit getragenen Spindeleinheit, welche zumindest zu einer Rotation eines in die Spindeleinheit eingesetzten Objekts um eine Spindelachse der Spindeleinheit vorgesehen ist, und welche zumindest eine Antriebseinheit zu einer Erzeugung der Rotationsbewegung des Objekts aufweist, vorgeschlagen worden. Aus der DE 10 2011 078 798 A1 ist eine Vorrichtung für ein Werkzeugeinstell-und/oder Werkzeugmessgerät nach dem Oberbegriff des Anspruchs 1 bekannt.

Die Aufgabe der Erfindung besteht insbesondere darin, eine gattungsgemäße Vorrichtung mit vorteilhaften Eigenschaften hinsichtlich einer Flexibilität bereitzustellen. Die Aufgabe wird erfindungsgemäß durch die Merkmale der Patentansprüche 1, 9 und 11 gelöst, während vorteilhafte Ausgestaltungen und Weiterbildungen der Erfindung den Unteransprüchen entnommen werden können.

### Vorteile der Erfindung

Die Erfindung geht aus von einer Vorrichtung für ein Werkzeugeinstell- und/oder Werkzeugmessgerät, mit einer Trägereinheit und mit einer von der Trägereinheit getragenen Spindeleinheit, insbesondere Motorspindeleinheit, welche zumindest zu einer Rotation eines in die Spindeleinheit eingesetzten Objekts, insbesondere eines Werkzeugs und/oder einer Werkzeugaufnahme, um eine Spindelachse der Spindeleinheit vorgesehen ist, und welche zumindest eine Antriebseinheit zu einer Erzeugung der Rotationsbewegung des Objekts aufweist.

Es wird vorgeschlagen, dass die Spindeleinheit eine, insbesondere mechanische, Kopplungseinheit aufweist, welche dazu vorgesehen ist, die Spindeleinheit, insbesondere zu einer Änderung eines maximal erreichbaren Spindeldrehmoments, in zumindest zwei differierenden Modi anzutreiben. Dadurch können vorteilhafte Eigenschaften hinsichtlich einer Flexibilität der Werkzeugeinstell- und/oder Werkzeugmessgerätevorrichtung erreicht werden. Vorteilhaft kann die Spindeleinheit einen ersten Antriebsmodus mit einer besonders hohen (millimetergenauen oder mikrometergenauen) Präzision einer Spindelpositionierung und einen zweiten Antriebsmodus mit einem besonders hohen Drehmoment von beispielsweise mehr als 80 Nm aufweisen. Vorteilhaft kann dadurch dieselbe Spindeleinheit zu einer Präzisionsvermessung von Werkzeugen und zu einem sicheren Werkzeugspannvorgang eingesetzt werden. Insbesondere kann dadurch ein vorteilhafter automatisierter Werkzeugspannvorgang, in welchem ein Werkzeug in eine Werkzeugaufnahme, insbesondere eine Werkzeugaufnahme mit Spannzange und Überwurfmutter, eingespannt wird oder in welchem das Werkzeug aus der Werkzeugaufnahme gelöst wird, vorzugsweise ohne eine Verschiebung der Werkzeugaufnahme zu erfordern, erreicht werden. Vorteilhaft kann dadurch ein hoher Grad an Automatisierung erreicht und/oder ein Betriebsablauf beschleunigt werden. Vorteilhaft kann insbesondere durch ein Umschalten zwischen den zwei Modi durch ein, vorzugsweise mechanisches, Koppeln eine hohe Betriebssicherheit erreicht werden, beispielsweise indem in einem Mess- und/oder Einstellbetrieb, welcher insbesondere eine manuelle Positionierung der Werkzeugaufnahme umfassen kann, der Modus, der ein hohes Spindeldrehmoment ermöglicht, entkoppelt ist.

Insbesondere bildet die Vorrichtung für ein Werkzeugeinstell- und/oder Werkzeugmessgerät zumindest einen Teil einer automatisierten, vorzugsweise vollautomatisierten, Werkzeugspanneinheit aus. Unter einer "automatisierten Werkzeugspanneinheit" soll insbesondere eine Vorrichtung verstanden werden, welche dazu vorgesehen ist, zumindest ein zu einem Einspannen des Werkzeugs in die Werkzeugaufnahme und/oder zu einem Ausspannen des Werkzeugs aus der Werkzeugaufnahme notwendiges Drehmoment automatisiert zu erzeugen und/oder automatisiert an die Werkzeugaufnahme zu übertragen. Unter der Wendung "automatisiert" soll in diesem Zusammenhang insbesondere maschinell und/oder unabhängig von einem Eingriff eines Bedieners, insbesondere unabhängig von einem Eingriff des Bedieners mit Ausnahme einer Aktivierung bzw. Deaktivierung des Werkzeugspannvorgangs durch den Bediener und/oder einer Einstellung eines Maschinenparameters der automatisierten Werkzeugspanneinheit, wie beispielsweise ein Zieldrehmoment, durch den Bediener verstanden werden. Unter einer "vollautomatisierten Werkzeugspanneinheit" soll insbesondere eine Vorrichtung verstanden werden, welche dazu vorgesehen ist, den Werkzeugeinspann- und/oder Werkzeugausspannvorgang vollständig unabhängig von einem Eingriff des Bedieners vorzunehmen, insbesondere mit Ausnahme einer Aktivierung bzw. Deaktivierung des vollautomatisierten Werkzeugspannvorgangs durch den Bediener und/oder einer Einstellung eines Maschinenparameters der vollautomatisierten Werkzeugspanneinheit. Insbesondere ist die vollautomatisierte Werkzeugspanneinheit dazu vorgesehen, alle Arbeitsschritte des Werkzeugeinspann- und/oder Werkzeugausspannvorgangs von einem Einsetzen der Werkzeugaufnahme in die vollautomatisierte Werkzeugspanneinheit bis zu einer anschließenden Entnahme der Werkzeugaufnahme aus der vollautomatisierten Werkzeugspanneinheit automatisiert, insbesondere zumindest maschinell und/oder unabhängig von einem Eingriff eines Bedieners, vorzunehmen. Unter einer Vorrichtung für ein Werkzeugeinstell- und/oder Werkzeugmessgerät soll insbesondere eine Vorrichtung verstanden werden, welche zumindest dazu vorgesehen ist, zumindest eine Länge, zumindest einen Winkel, zumindest eine Kontur und/oder zumindest eine Außenform eines Werkzeugs zumindest teilweise zu erfassen und/oder einzustellen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs-und/oder Betriebszustand erfüllt und/oder ausführt.

Unter einem "Werkzeug" soll insbesondere ein Werkzeug mit einem zylindrischen Schaft verstanden werden. Insbesondere ist das Werkzeug als ein Zerspanungswerkzeug ausgebildet. Insbesondere ist das Werkzeug als ein Präzisionswerkzeug ausgebildet, wobei das Werkzeug insbesondere eine hohe Rundlaufpräzision aufweist. Insbesondere ist das Werkzeug als eine Reibahle, ein Wälzfräser, ein Meißel, ein Senker und/oder vorzugsweise als ein Bohrer und/oder ein Fräser ausgebildet. Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Spannzangenfutter ausgebildet. Insbesondere weist das Spannzangenfutter eine Spannzange auf. Insbesondere ist die Spannzange dazu vorgesehen, das Werkzeug kraftschlüssig einzuspannen. Insbesondere ist die Spannzange mittels eines Festschraubens einer Überwurfmutter spannbar. Unter einer "Überwurfmutter" soll insbesondere ein Bauteil verstanden werden, welches dazu vorgesehen ist, zumindest teilweise auf die Spannzange der Werkzeugaufnahme und/oder auf einen Grundkörper der Werkzeugaufnahme aufschraubbar zu sein. Insbesondere weist die Überwurfmutter ein Innengewinde auf. Insbesondere weist die Werkzeugaufnahme ein Außengewinde auf. Insbesondere wird zu einem Einspannen des Werkzeugs in die Werkzeugaufnahme die Überwurfmutter über das in die Werkzeugaufnahme eingeführte Werkzeug gestülpt und mit der Werkzeugaufnahme verschraubt, bis ein festgelegtes Drehmoment erreicht wird. Insbesondere ist die Überwurfmutter zumindest im Wesentlichen zylindrisch oder prismenförmig ausgebildet. Insbesondere weist die Überwurfmutter eine glatte Zylinderoberfläche oder eine glatte Prismenoberfläche auf. Insbesondere weist die Überwurfmutter Werkzeugflächen, beispielsweise Schlüsselflächen, Kanten, Löcher, Schlitze oder dergleichen, welche dazu vorgesehen sind, eine Kraftübertragung eines Werkzeugs an die Überwurfmutter zu erleichtern, auf. Vorzugsweise ist die Überwurfmutter jedoch frei von Werkzeugflächen, beispielsweise Schlüsselflächen, Kanten, Löchern, Schlitzen oder dergleichen ausgebildet. Insbesondere weist die Überwurfmutter einen Außendurchmesser auf, welcher zumindest im Wesentlichen einem Außendurchmesser der Werkzeugaufnahme entspricht. Insbesondere ist die Überwurfmutter und/oder die Werkzeugaufnahme zumindest im Wesentlichen achsensymmetrisch ausgebildet. Vorzugsweise ist die Überwurfmutter und/oder die Werkzeugaufnahme jedoch zumindest im Wesentlichen rotationssymmetrisch ausgebildet. Unter "im Wesentlichen rotationssymmetrisch" soll insbesondere im Rahmen üblicher Fehlertoleranzen rotationssymmetrisch verstanden werden. Insbesondere weist die Überwurfmutter und/oder die Werkzeugaufnahme eine hohe Rundlaufpräzision auf. Unter einer "hohen Rundlaufpräzision" soll insbesondere eine Rundlaufpräzision verstanden werden, die kleiner als 0,005 mm, vorzugsweise kleiner als 0,002 mm und bevorzugt kleiner als 0,001 mm ist.

Die "Trägereinheit" ist insbesondere zumindest zu einer ortsfesten Positionierung zumindest der Spindeleinheit in einem Werkzeugeinstell- und/oder Werkzeugmessgerät vorgesehen. Die Trägereinheit kann einen Teil einer, insbesondere einen Großteil einer Gewichtskraft des Werkzeugeinstell- und/oder Werkzeugmessgeräts aufnehmenden, Rahmeneinheit des Werkzeugeinstell-und/oder Werkzeugmessgeräts ausbilden oder mit einer derartigen Rahmeneinheit fest verbunden sein. Die "Spindeleinheit" bildet insbesondere einen motorbetriebenen Teil des Werkzeugeinstell- und/oder Werkzeugmessgeräts aus, welcher dazu vorgesehen ist, die in die Spindeleinheit einsetzbare Werkzeugaufnahme rotationsfest zu der Spindeleinheit zu haltern und/oder zu drehen. Die Spindeleinheit ist insbesondere als eine werkzeugtragende Spindeleinheit und/oder eine werkzeugfuttertragende Spindeleinheit ausgebildet. Die Spindeleinheit umfasst eine präzise gelagerte, insbesondere direkt antreibbare Welle mit einem Aufnahmebereich für Werkzeugaufnahmen und/oder für Vorsatzhalter für Werkzeugaufnahmen. Die "Antriebseinheit" ist insbesondere dazu vorgesehen, die Spindeleinheit, insbesondere die Welle der Spindeleinheit zu rotieren. Die Antriebseinheit umfasst eine Motoreinheit, insbesondere eine Elektromotoreinheit. Die Antriebseinheit ist insbesondere programmgesteuert und/oder bedienergesteuert steuerbar.

Unter einer Kopplungseinheit soll insbesondere eine Einheit verstanden werden, welche dazu vorgesehen ist, durch einen, insbesondere kraftschlüssigen und/oder formschlüssigen, vorzugsweise mechanischen, Koppelvorgang eine Auswahl zwischen zwei differierenden Modi, insbesondere Antriebsmodi, der Spindeleinheit zu ermöglichen. Die Kopplungseinheit kann insbesondere als zumindest ein Teil einer Getriebeeinheit der Vorrichtung für ein Werkzeugeinstell- und/oder Werkzeugmessgerät ausgebildet sein. Darunter, dass die Kopplungseinheit dazu vorgesehen ist, die Spindeleinheit in "zwei differierenden Modi anzutreiben" soll insbesondere verstanden werden, dass die Kopplungseinheit dazu vorgesehen ist, einen, insbesondere mechanischen, Kopplungsvorgang durchzuführen, welcher ein Umschalten zwischen den zwei Modi bewirkt. Die Kopplungseinheit kann insbesondere dazu vorgesehen sein, ein durch die Antriebseinheit erzeugbares Spindeldrehmoment, beispielsweise durch eine Getriebeübersetzung eines der Antriebseinheit zugeordneten Getriebes der Getriebeeinheit, einzustellen. Alternativ oder zusätzlich kann die Kopplungseinheit dazu vorgesehen sein, eine weitere Antriebseinheit der Vorrichtung für ein Werkzeugeinstell- und/oder Werkzeugmessgerät zu einem Antrieb der Spindeleinheit mit einem erhöhten Spindeldrehmoment zuzuschalten oder die weitere Antriebseinheit von der Spindeleinheit zu trennen. Der zu einem Umschalten zwischen den differierenden Modi erforderliche Kopplungsvorgang der Kopplungseinheit ist insbesondere verschieden von einer reinen softwaretechnischen und/oder ansteuerungstechnischen Einstellung unterschiedlicher Betriebsmodi einer Antriebseinheit. Der zu einem Umschalten zwischen den differierenden Modi erforderliche Kopplungsvorgang der Kopplungseinheit ist insbesondere verschieden von einer einfachen Umkehrung einer Rotationsrichtung der Antriebseinheit. Die zwei differierenden Modi unterscheiden sich zumindest in dem maximal erreichbaren Spindeldrehmoment.

Ferner wird vorgeschlagen, dass die Spindeleinheit in einem zweiten Modus der beiden durch die Kopplungseinheit erzeugbaren Modi ein wesentlich höheres maximales Spindeldrehmoment erzeugt als in einem ersten Modus der beiden durch die Kopplungseinheit erzeugbaren Modi. Dadurch kann vorteilhaft eine hohe Flexibilität erreicht werden. Insbesondere kann vorteilhaft ein Modus für den Werkzeugspannvorgang und ein Modus für den Einstell- und/oder Messvorgang bereitgestellt werden. Vorteilhaft kann eine sichere Befestigung eines Werkzeugs in einer Werkzeugaufnahme oder ein zuverlässiges Lösen des Werkzeugs aus der Werkzeugaufnahme, insbesondere direkt am Messort des Werkzeugeinstell-und/oder Werkzeugmessgeräts ermöglicht werden. Insbesondere ist das maximal erreichbare Spindeldrehmoment in einem der differierenden Modi, insbesondere in dem zweiten Modus, zumindest 2-fach, vorzugsweise zumindest 5-fach, bevorzugt zumindest 10-fach und besonders bevorzugt zumindest 50-fach höher als in dem anderen der differierenden Modi, insbesondere in dem ersten Modus. Insbesondere beträgt das maximal erreichbare Spindeldrehmoment in dem zweiten Modus zumindest 40 Nm, vorzugsweise zumindest 60 Nm, bevorzugt zumindest 80 Nm und besonders bevorzugt zumindest 100 Nm. Die zwei differierenden Modi unterscheiden sich insbesondere zumindest in einer Leichtgängigkeit der Spindelrotation. Insbesondere ist der erste Modus zu einer Positionierung des Werkzeugs und/oder der Werkzeugaufnahme während des Einstell- und/oder Messvorgangs vorgesehen. Insbesondere ist der zweite Modus zu einem Ein- und/oder Ausspannen von Werkzeugen aus Werkzeugaufnahmen vorgesehen.

Erfindungsgemäß weist die Vorrichtung für ein Werkzeugeinstell- und/oder Werkzeugmessgerät eine von der Antriebseinheit getrennt und/oder verschieden ausgebildete weitere Antriebseinheit auf. Dadurch kann vorteilhaft eine besonders einfache Erzeugung der zwei differierenden Modi erreicht werden. Insbesondere kann dadurch eine vorteilhafte Modularität erreicht werden. Beispielsweise können bereits bestehende Systeme auf einfache Weise nachgerüstet werden oder neu ausgelieferte Systeme je nach Kundenbedarf mit oder ohne Möglichkeit zu einem Ein- und/oder Ausspannen von Werkzeugen aus Spannzangenfuttern mit Überwurfmutter ausgestattet werden. Die weitere Antriebseinheit ist insbesondere dazu vorgesehen, die Spindeleinheit, insbesondere die Welle der Spindeleinheit, zu rotieren. Die Antriebseinheit umfasst eine Motoreinheit, insbesondere eine Elektromotoreinheit. Die Antriebseinheit ist insbesondere programmgesteuert und/oder bedienergesteuert steuerbar. Insbesondere ist die weitere Antriebseinheit vorrangig, vorzugsweise ausschließlich, dazu vorgesehen, das für den, insbesondere automatisierten, Werkzeugeinspann- und/oder Werkzeugausspannvorgang benötigte erhöhte Drehmoment zu erzeugen, während die Antriebseinheit insbesondere dazu vorgesehen ist, eine präzise, leichtgängige Positionierung eines in einer Werkzeugaufnahme eingespannten Werkzeugs oder einer Werkzeugaufnahme ohne Werkzeug relativ zu einem optischen oder taktilen Messsystem des Werkzeugeinstell- und/oder Werkzeugmessgeräts zu ermöglichen.

Wenn die Kopplungseinheit außerdem dazu vorgesehen ist, die weitere Antriebseinheit mit der Spindeleinheit zu koppeln und/oder die weitere Antriebseinheit von der Spindeleinheit zu entkoppeln, kann vorteilhaft ein besonders einfaches Umschalten zwischen den differierenden Modi ermöglicht werden. Außerdem kann insbesondere durch die Möglichkeit des Entkoppelns der weiteren Antriebseinheit erreicht werden, dass Standardbedienvorgänge eines Werkzeugeinstell- und/oder Werkzeugmessgeräts wie beispielsweise manuelles Drehen der Spindeleinheit zu einem einfachen und präzisen Positionieren eines zu vermessenden Objekts weiterhin einfach, ergonomisch und sicher möglich sind. Vorteilhaft kann zudem ein bereits existierender Standard (das Werkzeugeinstell-und/oder Werkzeugmessgerät) um eine Zusatzfunktion (das Werkzeugspannen) erweitert werden, insbesondere ohne, dass eine Modifikation der Spindeleinheit an sich notwendig ist. Dadurch können vorteilhaft Kosten gering gehalten werden bei einer gleichzeitigen Beibehaltung eines hohen Bedienkomforts. Des Weiteren kann durch die Möglichkeit der kompletten Entkopplung der weiteren Antriebseinheit vorteilhaft eine hohe Bediensicherheit erreicht werden, insbesondere indem während Messvorgängen, während welcher ein Benutzer manuell eingreifen kann oder während manuellen Bestückungsvorgängen der Spindeleinheit die weitere Antriebseinheit entkoppelt werden kann und somit das maximal erreichbare Spindeldrehmoment während dieser manuell durchführbaren Vorgänge gering und damit weniger gefährlich ist.

Dazu wird vorgeschlagen, dass die Kopplungseinheit ein Formschlusskopplungselement umfasst. Dadurch kann vorteilhaft eine besonders einfache Kopplung und/oder Entkopplung der weiteren Antriebseinheit mit der Spindeleinheit erreicht werden. Vorteilhaft kann, insbesondere im Vergleich mit einer kraftschlüssigen Kopplungsmethode, eine Kopplung mit einem geringen Verschleiß erreicht werden. Insbesondere ist das Formschlusskopplungselement an der Spindeleinheit angeordnet. Insbesondere ist ein weiteres Formschlusskopplungselement an der weiteren Antriebseinheit angeordnet. Es ist denkbar, dass das Formschlusskopplungselement und das weitere Formschlusskopplungselement in einem gekoppelten Zustand der Kopplungseinheit zumindest teilweise ineinander formschlüssig eingreifen. Vorzugsweise ist jedoch zumindest ein zusätzliches weiteres Formschlusskopplungselement, insbesondere Zahnrad, oder mehrere weitere zusätzliche Formschlusskopplungselemente, insbesondere Zahnräder, zwischen das Formschlusskopplungselement und das weitere Formschlusskopplungselement zwischengeschaltet, insbesondere zu einer Erhöhung eines durch die weitere Antriebseinheit erzeugten Drehmoments. Es ist denkbar, dass das Formschlusskopplungselement und das weitere Formschlusskopplungselement in einem entkoppelten Zustand der Kopplungseinheit vollständig frei von einem gegenseitigen Eingriff ineinander sind. Vorzugsweise ist jedoch zumindest das Formschlusskopplungselement und/oder zumindest das weitere Formschlusskopplungselement in dem entkoppelten Zustand der Kopplungseinheit frei von einem Eingriff in jegliches weitere oder zusätzliches weitere Formschlusselement. Bevorzugt sind in dem entkoppelten Zustand zumindest zwei Formschlusskopplungselemente einer Kette von Formschlusselementen, welche zu einer Übertragung des Drehmoments der weiteren Antriebseinheit auf die Spindeleinheit miteinander wechselwirken, frei von einem gegenseitigen Eingriff. Insbesondere ist in dem entkoppelten Zustand der Kopplungseinheit kein Drehmoment von einem Abtrieb der weiteren Antriebseinheit zu der Spindeleinheit übertragbar.

Wenn das Formschlusskopplungselement als ein um die Spindelachse zentriertes Zahnrad ausgebildet ist, kann vorteilhaft eine besonders einfache und/oder effektive Kopplung der weiteren Antriebseinheit mit der Spindeleinheit ermöglicht werden. Vorteilhaft kann eine besonders einfache und/oder effektive Übertragung einer das Spindeldrehmoment erzeugenden Kraft von der weiteren Antriebseinheit auf die Spindeleinheit ermöglicht werden. Insbesondere ist das Zahnrad als ein Stirnrad ausgebildet. Insbesondere kann das Zahnrad als ein gerade verzahntes Stirnrad oder als ein schräg verzahntes Stirnrad ausgebildet sein. Insbesondere ist das Zahnrad rotationsfest mit der Spindeleinheit verbunden. Insbesondere weist das Zahnrad eine Außenverzahnung auf, welche vorzugsweise dazu vorgesehen ist, zu einer Kraftübertragung in eine Außenverzahnung des weiteren Formschlusselements einzugreifen. Insbesondere ist das weitere Formschlusselement ebenfalls als ein gerade- oder schrägverzahntes Stirnrad ausgebildet.

Außerdem wird vorgeschlagen, dass die weitere Antriebseinheit zumindest dazu vorgesehen ist, in dem gekoppelten Zustand der Kopplungseinheit eine von der Antriebseinheit unabhängige weitere Rotationsbewegung des Objekts zu erzeugen, wobei die Rotationsbewegung und die weitere Rotationsbewegung eine Rotation um dieselbe Spindelachse umfasst. Dadurch kann vorteilhaft erreicht werden, dass in beiden Modi eine Rotation um dieselbe Spindelachse erfolgt. Vorteilhaft kann dadurch ein besonders einfacher Ein- und/oder Ausspannvorgang gewährleistet werden. Insbesondere befindet sich die Antriebseinheit in dem gekoppelten Zustand in einem Leerlaufmodus. Insbesondere ist die Antriebseinheit in dem gekoppelten Zustand unangesteuert und/oder unbestromt. Insbesondere ist die weitere Antriebseinheit von der Antriebseinheit in dem gekoppelten Zustand zumindest im Wesentlichen unbeeinflusst. Unter "im Wesentlichen unbeeinflusst" soll insbesondere verstanden werden, dass ein Verlustanteil des durch die weitere Antriebseinheit erzeugten Drehmoments, welcher durch die Antriebseinheit hervorgerufen wird, kleiner ist als 2 %, vorzugsweise kleiner ist als 1 % und bevorzugt kleiner ist als 0,1 % des maximal durch die weitere Antriebseinheit erreichbaren Spindeldrehmoments. Das "Spindeldrehmoment" ist insbesondere als das Drehmoment zu verstehen, welches das in die Spindeleinheit eingesetzte Objekt bei einer Rotation der Spindeleinheit erfährt.

Wenn die weitere Antriebseinheit ein Übersetzungsgetriebe aufweist, kann vorteilhaft ein besonders hohes maximales Drehmoment, insbesondere in dem gekoppelten Zustand, erreicht werden. Insbesondere ist das Übersetzungsgetriebe dazu vorgesehen, eine Erhöhung des durch die weitere Antriebseinheit erzeugten Drehmoments um zumindest einen Faktor 3, vorzugsweise um zumindest einen Faktor 6, bevorzugt um zumindest einen Faktor 10 und besonders bevorzugt um zumindest einen Faktor 20 zu erzeugen. Insbesondere ist das Übersetzungsgetriebe als ein Umlaufrädergetriebe oder als ein Stirnradgetriebe ausgebildet. Insbesondere ist die weitere Antriebseinheit mit zumindest zwei verschiedenen Geschwindigkeiten betreibbar. Insbesondere ist die weitere Antriebseinheit mit einer ersten Geschwindigkeit betreibbar, welche dazu vorgesehen ist, die Überwurfmutter zu einem Großteil aufzuschrauben oder zu einem Großteil abzuschrauben. Insbesondere ist die weitere Antriebseinheit mit einer zweiten Geschwindigkeit betreibbar, welche dazu vorgesehen ist, die Überwurfmutter festzuziehen oder initial zu lösen. Insbesondere ist die erste Geschwindigkeit höher, vorzugsweise mindestens doppelt so hoch, wie die zweite Geschwindigkeit. Insbesondere ist das Drehmoment der Bewegung mit der zweiten Geschwindigkeit höher, vorzugsweise zumindest doppelt so hoch wie das Drehmoment der Bewegung mit der ersten Geschwindigkeit. Insbesondere ist das Übersetzungsgetriebe dazu vorgesehen, die erste oder die zweite Geschwindigkeit der weiteren Antriebseinheit einzustellen. Insbesondere wird das maximale Spindeldrehmoment nur dann erreicht, wenn die zweite Geschwindigkeit eingestellt ist. Vorteilhaft kann durch die beschriebenen zwei unterschiedlichen Geschwindigkeiten eine für einen Werkzeugeinspann- und/oder Werkzeugausspannvorgang notwendige Zeitdauer reduziert werden. Das Übersetzungsgetriebe kann insbesondere zumindest teilweise mit der weiteren Antriebseinheit mitbewegbar sein. Vorzugsweise ist das Übersetzungsgetriebe jedoch zumindest zu einem Großteil fest mit der Trägereinheit verbunden.

Zudem weist die erfindungsgemäße Vorrichtung für ein Werkzeugeinstell- und/ oder Werkzeugmessgerät eine Halteeinheit auf, welche dazu vorgesehen ist, die weitere Antriebseinheit an der Trägereinheit zu haltern. Dadurch kann vorteilhaft eine effektive Drehmomentübertragung von der weiteren Antriebseinheit auf die Spindeleinheit gewährleistet werden. Insbesondere ist die Halteeinheit an der Trägereinheit fixiert. Insbesondere ist die weitere Antriebseinheit an der Halteeinheit fixiert. Insbesondere bildet die Halteeinheit einen Teil der Kopplungseinheit aus.

Des Weiteren umfasst die erfindungsgemäße Halteeinheit eine Lagereinheit, welche dazu vorgesehen ist, die weitere Antriebseinheit beweglich, insbesondere linearbeweglich und/oder schwenkbar, zu lagern. Dadurch kann vorteilhaft eine einfache Kopplung und/oder Entkopplung der weiteren Antriebseinheit mit/von der Spindeleinheit ermöglicht werden. Insbesondere bildet die Lagereinheit einen Teil der Kopplungseinheit aus. Insbesondere ist die Lagereinheit dazu vorgesehen, die Antriebseinheit relativ zu der Spindeleinheit zu bewegen.

Außerdem ist eine Bewegung der weiteren Antriebseinheit mittels der Lagereinheit erfindungsgemäß dazu vorgesehen, jeweils einen der beiden Modi zu aktivieren und insbesondere dabei zugleich den anderen der beiden Modi zu deaktivieren. Dadurch kann vorteilhaft ein besonders einfaches und/oder zuverlässiges Umschalten zwischen den Modi erreicht werden. Insbesondere ist die Lagereinheit dazu vorgesehen, die weitere Antriebseinheit zwischen zumindest zwei vorgesehenen Endpositionen zu bewegen. In einer ersten Endposition ist die weitere Antriebseinheit mit der Spindeleinheit gekoppelt. In einer zweiten Endposition ist die weitere Antriebseinheit von der Spindeleinheit entkoppelt.

Weiterhin wird vorgeschlagen, dass die Lagereinheit ein, insbesondere als Hubelement, vorzugsweise Hubzylinder, ausgebildetes, Lagerelement umfasst, welches dazu vorgesehen ist, eine, insbesondere zu einer Kopplung der weiteren Antriebseinheit mit der Spindeleinheit und eine zu einer Entkopplung der Antriebseinheit von der Spindeleinheit erforderliche, Bewegung, insbesondere eine Linearbewegung, der weiteren Antriebseinheit zumindest teilautomatisiert zu erzeugen. Dadurch kann vorteilhaft ein besonders hoher Grad an Automatisierung erreicht werden, wodurch insbesondere eine Arbeitsbelastung und/oder ein Risiko einer Fehlbedienung reduziert werden kann. Zudem kann vorteilhaft ein einfaches Umschalten zwischen den zwei Modi erreicht werden. Vorzugsweise ist das Lagerelement pneumatisch oder hydraulisch angetrieben. Alternativ kann das Lagerelement jedoch auch auf andere Weise angetrieben sein, beispielsweise über einen elektrischen Stellmotor. Insbesondere ist das Lagerelement computerprogrammgesteuert bewegbar. Insbesondere ist das Lagerelement dazu vorgesehen, einen Hub von zumindest 10 mm, vorzugsweise zumindest 15 mm, bevorzugt zumindest 25 mm und besonders bevorzugt zumindest 40 mm zu erzeugen.

Zusätzlich wird ein Werkzeugeinstell- und/oder Werkzeugmessgerät mit der Vorrichtung für ein Werkzeugeinstell- und/oder Werkzeugmessgerät vorgeschlagen, welches insbesondere eine, vorzugsweise automatisierte, Werkzeugspanneinheit zu einem Ein- und/oder Ausspannen von Werkzeugen in/aus in der Spindeleinheit aufgenommenen Werkzeugaufnahmen mit, insbesondere werkzeugflächenlosen, Überwurfmuttern aufweist, wobei die Werkzeugspanneinheit dazu vorgesehen ist, mittels einer Rotation der Spindeleinheit um die Spindelachse die Überwurfmuttern festzudrehen oder zu lösen. Dadurch können insbesondere vorteilhafte Eigenschaften hinsichtlich eines Ein- und/oder Ausspannprozesses eines Werkzeugs, insbesondere eines Werkzeugs, welches eine formschlüssige Verbindung mit der Überwurfmutter und/oder vorzugsweise eine zumindest zu einem Teil, insbesondere zumindest zu einem Großteil, kraftschlüssige Klemmung einer Überwurfmutter zur Manipulation der Überwurfmutter bei einem Werkzeugeinspann- und/oder Werkzeugausspannvorgang erfordert, in eine Werkzeugaufnahme und/oder aus einer Werkzeugaufnahme erreicht werden. Vorteilhaft kann ein hoher Grad an Automatisierung erreicht werden. Dadurch kann vorteilhaft eine hohe Taktfrequenz des Werkzeugeinspann- und/oder Werkzeugausspannvorgangs erreicht werden, wodurch insbesondere eine hohe Effizienz erreicht werden kann. Zudem kann durch die Werkzeugspanneinheit vorteilhaft eine möglichst präzise und/oder über eine Mehrzahl verschiedener Werkzeugspannvorgänge konstante Einstellung einer Werkzeugspannkraft und/oder eines Werkzeugspanndrehmoments ermöglicht werden.

Ferner wird ein Verfahren zum Betrieb der Vorrichtung für ein Werkzeugeinstell-und/oder Werkzeugmessgerät vorgeschlagen, bei dem die Kopplungseinheit zumindest zwei Kopplungsstellungen aufweist, wobei in einer ersten Kopplungsstellung die Spindeleinheit von einer Antriebseinheit in dem ersten Modus angetrieben wird und wobei in einer zweiten Kopplungsstellung die Spindeleinheit alternativ zu der Antriebseinheit oder zusätzlich zu der Antriebseinheit von einer von der Antriebseinheit getrennt und/oder verschieden ausgebildeten weiteren Antriebseinheit in dem zweiten Modus angetrieben wird.

Dadurch kann vorteilhaft eine hohe Flexibilität der Vorrichtung für ein Werkzeugeinstell- und/oder Werkzeugmessgerät erreicht werden. Insbesondere entspricht die erste Kopplungsstellung der zweiten Endposition der Lagereinheit. Insbesondere entspricht die zweite Kopplungsstellung der ersten Endposition der Lagereinheit. Außerdem wird vorgeschlagen, dass in dem Verfahren zum Betrieb der Vorrichtung für ein Werkzeugeinstell- und/oder Werkzeugmessgerät bei einem Kopplungsvorgang der Kopplungseinheit, bei dem die weitere Antriebseinheit mit der Spindeleinheit gekoppelt wird, die Spindeleinheit durch die Antriebseinheit mit einer geringen Rotationsgeschwindigkeit rotiert wird. Dadurch kann vorteilhaft eine Kopplung verbessert werden. Insbesondere kann vorteilhaft eine einfache Herstellung des Formschlusses zwischen Formschlusskopplungselementen erreicht werden. Insbesondere kann dadurch erreicht werden, dass ein Zahnkopf des zu koppelnden Formschlusskopplungselements, insbesondere des weiteren Formschlusskopplungselements einfach in eine Zahnlücke eines korrespondierenden Formschlusskopplungselements eingreift oder umgekehrt. Insbesondere wird die Spindeleinheit durch die Antriebseinheit bei einem Verfahren der weiteren Antriebseinheit mittels der Lagereinheit, mit dem Ziel der Herstellung des gekoppelten Zustands, langsam gedreht. Unter einer "geringen Rotationsgeschwindigkeit" soll insbesondere eine Rotationsgeschwindigkeit von höchstens 5° pro Sekunde, vorzugsweise höchstens 10° pro Sekunde, bevorzugt höchstens 45° pro Sekunde und besonders bevorzugt höchstens 90° pro Sekunde verstanden werden.

Die erfindungsgemäße Vorrichtung für ein Werkzeugeinstell- und/oder Werkzeugmessgerät, das erfindungsgemäße Werkzeugeinstell-und/oder Werkzeugmessgerät und das erfindungsgemäße Verfahren soll hierbei nicht auf die oben beschriebene Anwendung und Ausführungsform beschränkt sein. Insbesondere kann die erfindungsgemäße Vorrichtung für ein Werkzeugeinstell- und/oder Werkzeugmessgerät, das erfindungsgemäße Werkzeugeinstell-und/oder Werkzeugmessgerät und das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: eine schematische Darstellung eines Werkzeugeinstell- und/oder Werkzeugmessgeräts mit einem Werkzeug und einer Werkzeugaufnahme,
- Fig. 2: eine perspektivische, schematische Darstellung der Werkzeugaufnahme,
- Fig. 3: eine perspektivische, schematische Darstellung eines Spannelements des Werkzeugeinstell- und/oder Werkzeugmessgeräts,
- Fig. 4: eine perspektivische, schematische Darstellung eines Drehmomentaufnahmeelements des Werkzeugeinstell- und/oder Werkzeugmessgeräts,
- Fig. 5: eine perspektivische, schematische Darstellung einer Vorrichtung für ein Werkzeugeinstell- und/oder Werkzeugmessgerät des Werkzeugeinstell- und/oder Werkzeugmessgeräts in einer ersten Kopplungsstellung,
- Fig. 6: eine perspektivische, schematische Darstellung der Vorrichtung für ein Werkzeugeinstell- und/oder Werkzeugmessgerät in einer zweiten Kopplungsstellung und
- Fig. 7: ein schematisches Ablaufdiagramm eines Verfahrens zum Betrieb der Vorrichtung für ein Werkzeugeinstell- und/oder Werkzeugmessgerät.

### Beschreibung des Ausführungsbeispiels

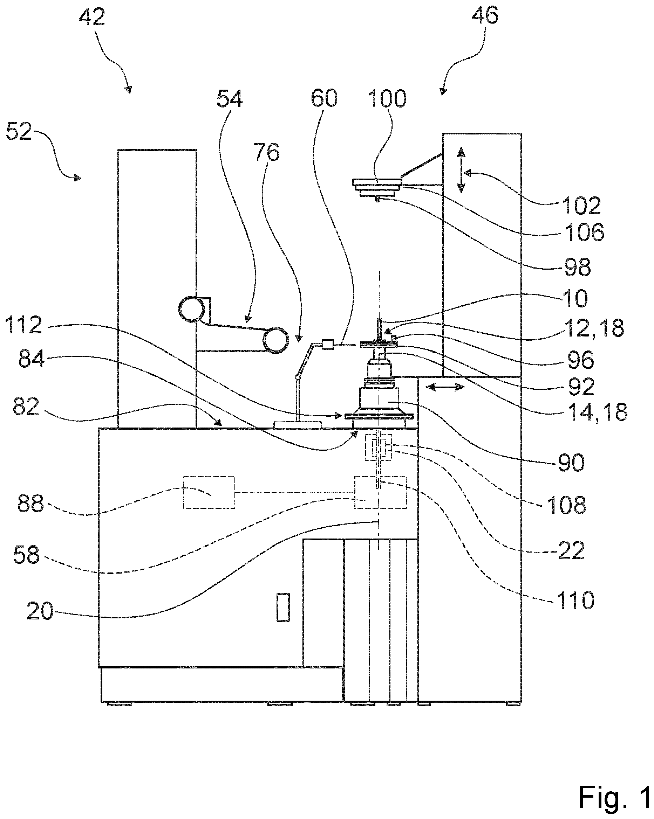

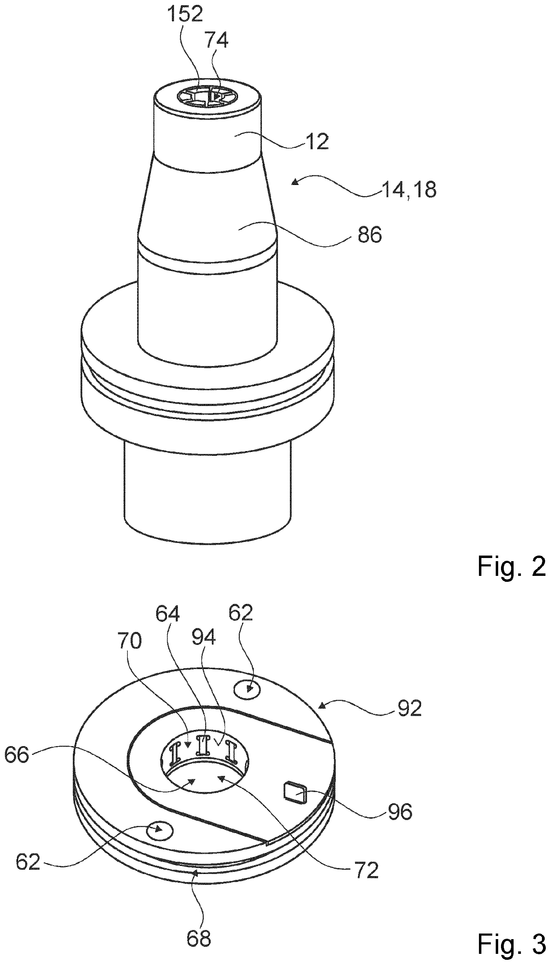

Fig. 1 zeigt ein Werkzeugeinstell- und/oder Werkzeugmessgerät 42, welches zumindest zu einer Einstellung und/oder einer, vorzugsweise optischen, Vermessung eines Objekts 18 vorgesehen ist. Das Objekt 18 ist im dargestellten Ausführungsbeispiel als ein Werkzeug 10 ausgebildet. Das Werkzeugeinstell-und/oder Werkzeugmessgerät 42 ist zu einer Einstellung und/oder einer, vorzugsweise optischen, Vermessung des in einer Werkzeugaufnahme 14 eingespannten Werkzeugs 10 vorgesehen. Die Werkzeugaufnahme 14 ist als ein Spannzangenfutter ausgebildet (vgl. auch Fig. 2). Die Werkzeugaufnahme 14 umfasst eine Überwurfmutter 12. Die Werkzeugaufnahme 14 umfasst einen Grundkörper 86. Die Überwurfmutter 12 ist auf den Grundkörper 86 aufschraubbar ausgebildet. Die Werkzeugaufnahme 14 weist eine Werkzeugaufnahmeöffnung 74 auf. Die Werkzeugaufnahmeöffnung 74 ist zu einem Einstecken und/oder einer Aufnahme eines Werkzeugschafts eines Werkzeugs 10 vorgesehen. Die Werkzeugaufnahme 14 weist eine Spannzange 152 auf. Die Spannzange 152 ist in der Werkzeugaufnahmeöffnung 74 der Werkzeugaufnahme 14 angeordnet. Die Überwurfmutter 12 ist dazu vorgesehen, über ein in die Werkzeugaufnahmeöffnung 74 eingestecktes Werkzeug 10 geführt und mit dem Grundkörper 86 der Werkzeugaufnahme 14 verschraubt zu werden. Die Spannzange 152 ist dazu vorgesehen, mittels eines Aufschraubens der Überwurfmutter 12 gespannt zu werden. Die Spannzange 152 ist dazu vorgesehen, mittels eines Aufschraubens der Überwurfmutter 12 ein Werkzeug 10 in der Werkzeugaufnahmeöffnung 74 zu fixieren.

Das Werkzeugeinstell- und/oder Werkzeugmessgerät 42 umfasst einen Messturm 52. Der Messturm 52 weist eine optische Messeinrichtung 54 auf. Die optische Messeinrichtung 54 ist dazu vorgesehen, das in der Werkzeugaufnahme 14 eingespannte Werkzeug 10, insbesondere zumindest eine Schneide des in der Werkzeugaufnahme 14 eingespannten Werkzeugs 10, zu vermessen und/oder einzustellen. Die optische Messeinrichtung 54 ist als eine Durchlichtmesseinrichtung ausgebildet. Alternativ oder zusätzlich kann das Werkzeugeinstell- und/oder Werkzeugmessgerät 42 eine Auflichtmesseinrichtung umfassen. Die optische Messeinrichtung 54 ist vertikal entlang des Messturms 52 verfahrbar. Das Werkzeugeinstell- und/oder Werkzeugmessgerät 42 weist einen Messtisch 82 auf. Der Messturm 52 ist entlang des Messtisches 82 horizontal verfahrbar ausgebildet. Die optische Messeinrichtung 54 ist entlang des Messtisches 82 horizontal verfahrbar ausgebildet. Das Werkzeugeinstell- und/oder Werkzeugmessgerät 42 weist eine Steuer- und/oder Regeleinheit 88 auf. Die Steuer- und/oder Regeleinheit 88 ist zumindest dazu vorgesehen, die Bewegung und/oder die Funktion des Messturms 52 und/oder der optischen Messeinrichtung 54 zu steuern und/oder zu regeln. Die Steuer- und/oder Regeleinheit 88 umfasst zumindest eine elektronische Recheneinheit.

Das Werkzeugeinstell- und/oder Werkzeugmessgerät 42 weist einen Vorsatzhalter 90 auf. Der Vorsatzhalter 90 ist zu einer drehfesten Aufnahme der Werkzeugaufnahme 14 vorgesehen. Der Vorsatzhalter 90 ist an eine Außenform der Werkzeugaufnahme 14 angepasst. Das Werkzeugeinstell- und/oder Werkzeugmessgerät 42 weist eine Mehrzahl verschieden geformter Vorsatzhalter 90 auf, welche an verschiedene Außenformen verschiedener Werkzeugaufnahmen 14 angepasst sind. Der Vorsatzhalter 90 ist austauschbar ausgebildet.

Das Werkzeugeinstell- und/oder Werkzeugmessgerät 42 weist eine Winkelsensoreinheit 58 auf. Die Winkelsensoreinheit 58 ist dazu vorgesehen, einen Drehwinkel, eine Drehrichtung und/oder eine Drehzahl des Vorsatzhalters 90 relativ zu dem Messtisch 82 des Werkzeugeinstell- und/oder Werkzeugmessgeräts 42 zu sensieren. Die Winkelsensoreinheit 58 ist teilweise einstückig mit der Steuer- und/oder Regeleinheit 88 ausgebildet. Alternativ oder zusätzlich ist die Winkelsensoreinheit 58 dazu vorgesehen, zumindest Winkelmessdaten und/oder Winkelgeschwindigkeitsmessdaten an die Steuer-und/oder Regeleinheit 88 zu übermitteln und/oder zumindest Steuer- und/oder Regelbefehle von der Steuer- und/oder Regeleinheit 88 zu empfangen und/oder zu verarbeiten.

Das Werkzeugeinstell- und/oder Werkzeugmessgerät 42 weist einen Handhabungsroboter 76 auf. Der Handhabungsroboter 76 ist dazu vorgesehen, ein Spannelement 92 des Werkzeugeinstell- und/oder Werkzeugmessgeräts 42 automatisiert auf die Werkzeugaufnahme 14 aufzusetzen und/oder von der Werkzeugaufnahme 14 abzunehmen. Der Handhabungsroboter 76 ist als ein mehrachsiger Industrieroboter ausgebildet. Der Handhabungsroboter 76 weist eine Greifereinheit 60 auf. Die Greifereinheit 60 ist dazu vorgesehen, Spannelemente 92 zu greifen, aufzunehmen und/oder abzulegen.

Das Werkzeugeinstell- und/oder Werkzeugmessgerät 42 weist eine automatisierte Werkzeugspanneinheit 46 auf. Die Werkzeugspanneinheit 46 ist vollautomatisiert. Die Werkzeugspanneinheit 46 ist dazu vorgesehen, zumindest ein Werkzeug 10 mittels eines Festziehens der Überwurfmutter 12 in die Werkzeugaufnahme 14 einzuspannen und/oder das Werkzeug 10 mittels eines Lösens der Überwurfmutter 12 aus der Werkzeugaufnahme 14 auszuspannen. Die Werkzeugspanneinheit 46 weist das Spannelement 92 auf (vgl. auch Fig. 3). Das Spannelement 92 ist lose auf die Werkzeugaufnahme 14 aufsetzbar ausgebildet. Das Spannelement 92 ist lose von der Werkzeugaufnahme 14 abnehmbar ausgebildet. Das Spannelement 92 ist dazu vorgesehen, eine Verbindung mit der Überwurfmutter 12 der Werkzeugaufnahme 14 herzustellen. Das Spannelement 92 weist einen Verbindungsmechanismus 70 auf. Der Verbindungsmechanismus 70 ist zu einer Herstellung der Verbindung des Spannelements 92 mit der Überwurfmutter 12 vorgesehen. Die Verbindung des Spannelements 92 mit der Überwurfmutter 12 ist als eine Klemmverbindung ausgebildet. Der Verbindungsmechanismus 70 des Spannelements 92 ist als ein Klemmmechanismus ausgebildet. Der in Fig. 3 gezeigte, als Klemmmechanismus ausgebildete, Verbindungsmechanismus 70 des Spannelements 92 ist dazu vorgesehen, eine zu einem Großteil kraftschlüssige Verbindung mit der Überwurfmutter 12 der Werkzeugaufnahme 14 herzustellen.

Das in Fig. 3 gezeigte Spannelement 92 weist einen Klemmbereich 66 auf. Der Klemmbereich 66 ist dazu vorgesehen, die Überwurfmutter 12 aufzunehmen. Der Klemmbereich 66 ist dazu vorgesehen, die Überwurfmutter 12 zu umschließen. Der Klemmbereich 66 bildet eine Ausnehmung 72 in dem Spannelement 92 aus. Die Ausnehmung 72 des Spannelements 92 weist eine zu einer Außenform der Überwurfmutter 12 korrespondierende Form auf. Das Spannelement 92 weist eine Mehrzahl an Klemmelementen 64 auf. Die Klemmelemente 64 sind verteilt entlang einer Wandung 94 der Ausnehmung 72 des Spannelements 92 angeordnet. Die Klemmelemente 64 sind dazu vorgesehen, die Überwurfmutter 12 in dem Klemmbereich 66 festzuklemmen. Die Klemmelemente 64 sind dazu vorgesehen, eine zylinderförmige, frei von Werkzeugflächen ausgebildete Überwurfmutter 12 zu klemmen.

Der Verbindungsmechanismus 70 ist knarrenartig bedienbar ausgebildet. In einem Zustand, in dem das Spannelement 92 mit einem Werkzeug 10 verbunden ist, ist das Spannelement 92 mittels des knarrenartig bedienbaren Verbindungsmechanismus 70 um eine parallel zu einer Einsteckrichtung des Werkzeugs 10 in den Klemmbereich 66 verlaufende Rotationsachse in eine Rotationsrichtung teilweise um das Werkzeug 10 rotierbar, während es in einer der Rotationsrichtung entgegengesetzten Spannrotationsrichtung nur zusammen mit dem Werkzeug 10 rotierbar ist. Eine Rotation des Spannelements 92 in die Spannrotationsrichtung ist zu einem Festziehen und/oder einem Lösen einer Überwurfmutter 12 vorgesehen. Eine Rotation des Spannelements 92 in die der Spannrotationsrichtung entgegengesetzte Rotationsrichtung führt hingegen nicht zu einem Festziehen und/oder einem Lösen der Überwurfmutter 12. Die Spannrotationsrichtung ist wählbar. Das Spannelement 92 weist ein Umschaltelement 96 auf, welches dazu vorgesehen ist, ein Umschalten zwischen zwei entgegengesetzten Spannrotationsrichtungen des knarrenartig bedienbaren Verbindungsmechanismus 70 zu ermöglichen.

Das Spannelement 92 weist ein Halteelement 68 auf. Das Halteelement 68 ist als eine Greiferrille ausgebildet. Das Halteelement 68 ist dazu vorgesehen, eine Angriffsfläche für die Greifereinheit 60a des Handhabungsroboters 76 auszubilden. Die Greifereinheit 60 des Handhabungsroboters 76 ist dazu vorgesehen, zu einem Aufnehmen des Spannelements 92 mittels gabelförmiger Greiferelemente der Greifereinheit 60 formschlüssig in das Halteelement 68 einzugreifen. Das Spannelement 92 weist korrespondierende Drehmomentübertragungselemente 62 auf. Die korrespondierenden Drehmomentübertragungselemente 62 sind zu einer Kopplung mit Drehmomentübertragungselementen 98 eines Drehmomentaufnahmeelements 100 der Werkzeugspanneinheit 46 vorgesehen.

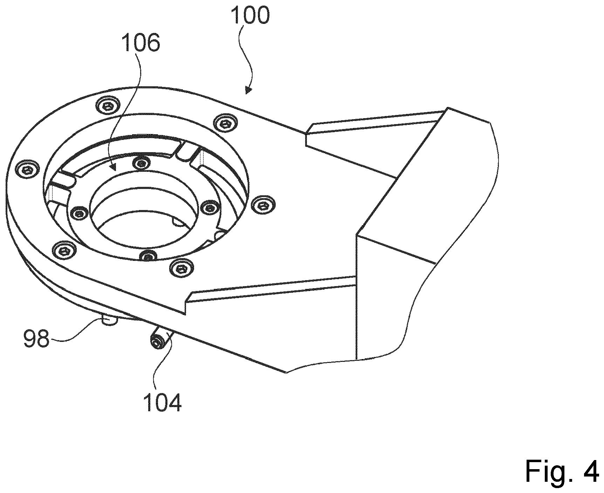

Die Werkzeugspanneinheit 46 weist das Drehmomentaufnahmeelement 100 auf (vgl. auch Fig. 4). Das Drehmomentaufnahmeelement 100 ist dazu vorgesehen, einen Großteil eines während eines Werkzeugspannvorgangs auftretenden Drehmoments aufzunehmen. Das Drehmomentaufnahmeelement 100 und das Spannelement 92 sind getrennt voneinander ausgebildet. Das Drehmomentaufnahmeelement 100 weist das Drehmomentübertragungselement 98 auf. Das Drehmomentübertragungselement 98 des Drehmomentaufnahmeelements 100 ist dazu vorgesehen, das Drehmomentaufnahmeelement 100 mit dem Spannelement 92 rotationsfest zu koppeln. Das Drehmomentübertragungselement 98 des Drehmomentaufnahmeelements 100 und das korrespondierende Drehmomentübertragungselement 62 des Spannelements 92 greifen zu einer Kopplung des Spannelements 92 mit dem Drehmomentaufnahmeelement 100 ineinander ein. Das Drehmomentübertragungselement 98 ist als ein Pin ausgebildet. Das korrespondierende Drehmomentübertragungselement 62 ist als eine Ausnehmung ausgebildet.

Das Werkzeugeinstell- und/oder Werkzeugmessgerät 42 weist eine vertikale Verstelleinheit 102 auf. Die vertikale Verstelleinheit 102 ist dazu vorgesehen, ein vertikales Verfahren des Drehmomentaufnahmeelements 100 zu erlauben. Mittels des vertikalen Verfahrens des Drehmomentaufnahmeelements 100 ist eine Kopplung der Drehmomentübertragungselemente 62, 98 herstellbar. Ein vertikales Absenken des Drehmomentaufnahmeelements 100 in Richtung eines auf die Werkzeugaufnahme 14 aufgesetzten Spannelements 92 führt zu einem Eingreifen des Drehmomentübertragungselements 98 des Drehmomentaufnahmeelements 100 in das korrespondierende Drehmomentübertragungselement 62 des Spannelements 92. Zumindest die Position und/oder zumindest die Verfahrgeschwindigkeit der vertikalen Verstelleinheit 102 ist mittels der Steuer-und/oder Regeleinheit 88 einstellbar. Beispielsweise ist denkbar, dass durch die optische Messeinrichtung 54 erfasste Positions- und/oder Dimensionsdaten durch die Steuer- und/oder Regeleinheit 88 verarbeitet und in Steuerbefehle für die vertikale Verstelleinheit 102 umgewandelt werden. Dadurch kann vorteilhaft eine präzise und/oder beschädigungsfreie Kopplung der Drehmomentübertragungselemente 62, 98 ermöglicht werden. Insbesondere ist denkbar, dass die optische Messeinrichtung 54 dazu vorgesehen ist, fehlerhaft positionierte Spannelemente 92, beispielsweise verdreht und/oder schräg auf der Werkzeugaufnahme 14 aufliegende Spannelemente 92 zu erkennen und in der Konsequenz ein Absenken des Drehmomentaufnahmeelements 100 bzw. eine Kopplung der Drehmomentübertragungselemente 62, 98 miteinander zu verhindern. Dadurch können Fehlfunktionen und/oder Beschädigungen der Werkzeugspanneinheit 46 vorteilhaft vermieden werden.

Das Drehmomentaufnahmeelement 100 weist ein Betätigungselement 104 auf. Das Betätigungselement 104 ist dazu vorgesehen, das Umschaltelement 96 des Spannelements 92 zu betätigen. Das Drehmomentaufnahmeelement 100 umfasst einen Pneumatikzylinder, welcher dazu vorgesehen ist, eine Bewegung zumindest eines Teils des Betätigungselements 104 zu erzeugen, welche dazu vorgesehen ist, das Umschaltelement 96 mechanisch zu betätigen.

Das Drehmomentaufnahmeelement 100 umfasst einen Drehmomentsensor 106. Der Drehmomentsensor 106 ist dazu vorgesehen, ein an dem Drehmomentaufnahmeelement 100 anliegendes Drehmoment zu sensieren. Der Drehmomentsensor 106 ist als ein Drehmoment-Messflansch ausgebildet. Der Drehmomentsensor 106 umfasst einen Drehmomentaufnehmer. Der Drehmomentaufnehmer ist als ein Federkörper ausgebildet. Alternativ oder zusätzlich kann der Drehmomentaufnehmer nach einem piezoelektrischen, magnetoelastischen und/oder optischen Prinzip funktionieren. Die Steuer-und/oder Regeleinheit 88 ist dazu vorgesehen, Daten des Drehmomentsensors 106 auszulesen und/oder zu empfangen. Die Steuer- und/oder Regeleinheit 88 ist dazu vorgesehen, einen Verlauf eines Drehmoments, welches die Werkzeugspanneinheit 46 bei dem Werkzeugspannvorgang auf die Überwurfmutter 12 ausübt, zu steuern und/oder zu regeln. Die Steuer- und/oder Regeleinheit 88 ist dazu vorgesehen, ein maximales Drehmoment, welches die Werkzeugspanneinheit 46 bei dem Werkzeugspannvorgang auf die Überwurfmutter 12 ausübt, einzustellen.

Das Werkzeugeinstell- und/oder Werkzeugmessgerät 42 weist eine Vorrichtung (44) für ein Werkzeugeinstell- und/oder Werkzeugmessgerät auf. Die Vorrichtung (44) für ein Werkzeugeinstell- und/oder Werkzeugmessgerät weist eine Spindeleinheit 84 auf. Die Spindeleinheit 84 ist als eine Motorspindeleinheit ausgebildet. Die Spindeleinheit 84 ist zu einer Aufnahme des Vorsatzhalters 90 vorgesehen. Die Spindeleinheit 84 ist dazu vorgesehen, mit einem Vorsatzhalter 90 drehfest zu koppeln. Alternativ kann die Spindeleinheit 84 auch zu einer direkten Aufnahme des Werkzeugs 10 oder der Werkzeugaufnahme 14 vorgesehen sein. Die Spindeleinheit 84 weist eine Spindelachse 20 auf. Die Spindelachse 20 verläuft zentral durch die Spindeleinheit 84. Die Spindelachse 20 bildet eine Rotationsmittelachse der Spindeleinheit 84 aus. Die Spindeleinheit 84a ist rotierbar ausgebildet. Die Spindeleinheit 84 ist zu einer Rotation des in die Spindeleinheit 84 eingesetzten Objekts 18, insbesondere des Werkzeugs 10 und/oder der Werkzeugaufnahme 14, um die Spindelachse 20 vorgesehen. Die Spindeleinheit 84 weist eine Antriebseinheit 22 auf. Die Antriebseinheit 22 ist zu einer Erzeugung der Rotationsbewegung des Objekts 18, insbesondere des Werkzeugs 10 und/oder der Werkzeugaufnahme 14, um die Spindelachse 20 vorgesehen. Die Antriebseinheit 22 ist zu einer Erzeugung der Rotationsbewegung zumindest des Teils der Spindeleinheit 84 vorgesehen, welcher das Werkzeug 10 und/oder die Werkzeugaufnahme 14 haltert. Die Antriebseinheit 22 ist zu einer Erzeugung der Rotationsbewegung des Vorsatzhalters 90 vorgesehen. Die Antriebseinheit 22 umfasst einen Antriebsmotor 108. Die Spindeleinheit 84 umfasst eine Antriebswelle 110. Die Antriebswelle 110 ist dazu vorgesehen, ein durch den Antriebsmotor 108 erzeugtes Drehmoment zumindest auf den Teil der Spindeleinheit 84, welcher das Werkzeug 10 und/oder die Werkzeugaufnahme 14 haltert, insbesondere auf den Vorsatzhalter 90 zu übertragen. Die Werkzeugspanneinheit 46 ist dazu vorgesehen, mittels einer Rotation der Spindeleinheit 84 um die Spindelachse 20 Überwurfmuttern 12 von Werkzeugaufnahmen 14 festzudrehen oder zu lösen.

Die Spindeleinheit 84 bildet eine Drehmomenterzeugungseinheit 112 aus. Die Drehmomenterzeugungseinheit 112 ist getrennt von dem Spannelement 92 und/oder getrennt von dem Drehmomentaufnahmeelement 100 ausgebildet. Die Drehmomenterzeugungseinheit 112 ist dazu vorgesehen, ein für einen Werkzeugeinspann- und/oder Werkzeugausspannvorgang erforderliches Drehmoment zu erzeugen. Die Drehmomenterzeugungseinheit 112 ist einstückig mit der Spindeleinheit 84 ausgebildet. Die Drehmomenterzeugungseinheit 112 ist einstückig mit einer Einheit des Werkzeugeinstell- und/oder Werkzeugmessgeräts 42 ausgebildet, welche zu einer Positionierung des Werkzeugs 10 während eines Einstell- und/oder Messvorgangs des Werkzeugeinstell- und/oder Werkzeugmessgeräts 42a, beispielsweise mittels der optischen Messeinrichtung 54, vorgesehen ist. Die Drehmomenterzeugungseinheit 112, insbesondere das durch die Drehmomenterzeugungseinheit 112 erzeugte Drehmoment und/oder die durch die Drehmomenterzeugungseinheit 112 erzeugte Rotation, ist mittels der Steuer- und/oder Regeleinheit 88 steuerbar. Eine Steuerung und/oder Regelung des Drehmoments und/oder der Rotation der Drehmomenterzeugungseinheit 112 erfolgt auf Basis von Messdaten des Drehmomentsensors 106.

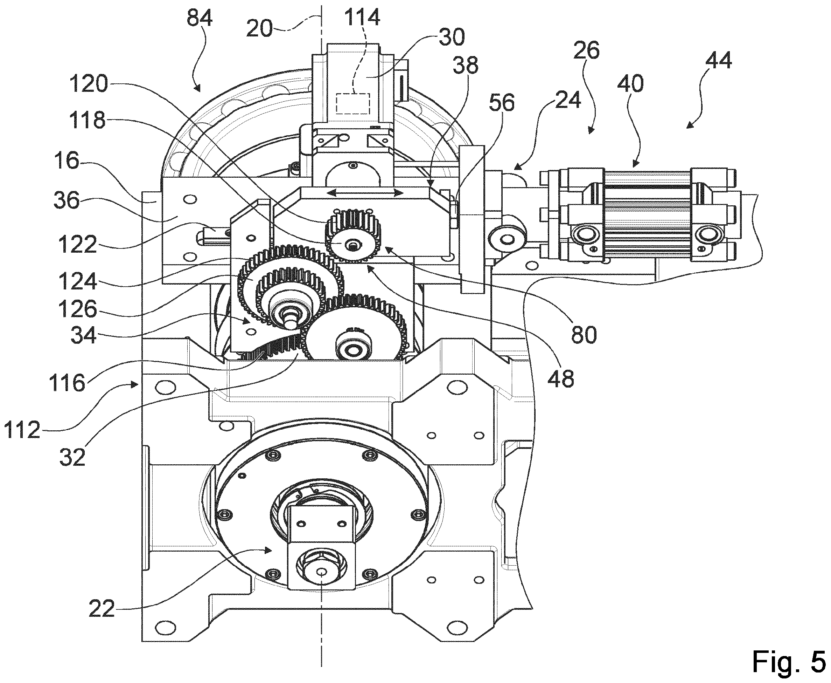

Die Fig. 5 zeigt eine schematische perspektivische Ansicht eines Teils des Werkzeugeinstell- und/oder Werkzeugmessgeräts 42 mit der Vorrichtung (44) für ein Werkzeugeinstell- und/oder Werkzeugmessgerät. Die Spindeleinheit 84 ist fest mit dem Werkzeugeinstell- und/oder Werkzeugmessgerät 42 verbunden. Die Vorrichtung (44) für ein Werkzeugeinstell- und/oder Werkzeugmessgerät weist eine Trägereinheit 16 auf. Die Trägereinheit 16 trägt die Spindeleinheit 84. Die Trägereinheit 16 ist positions- und rotationsfest mit dem Werkzeugeinstell-und/oder Werkzeugmessgerät 42 verbunden.

Die Vorrichtung (44) für ein Werkzeugeinstell- und/oder Werkzeugmessgerät weist eine weitere Antriebseinheit 30 auf. Die weitere Antriebseinheit 30 ist von der Antriebseinheit 22 getrennt ausgebildet. Die weitere Antriebseinheit 30 ist von der Spindeleinheit 84 getrennt ausgebildet. Die weitere Antriebseinheit 30 ist von der Antriebseinheit 22 verschieden ausgebildet. Die weitere Antriebseinheit 30 ist von der Spindeleinheit 84 verschieden ausgebildet. Die weitere Antriebseinheit 30 umfasst einen weiteren Antriebsmotor 114. Der weitere Antriebsmotor 114 ist getrennt von dem Antriebsmotor 108 ausgebildet. Die weitere Antriebseinheit 30 weist ein Übersetzungsgetriebe 34 auf. Das Übersetzungsgetriebe 34 ist als ein Stirnradgetriebe ausgebildet. Das Übersetzungsgetriebe 34 ist an der Trägereinheit 16 befestigt.

Die Spindeleinheit 84 weist eine Kopplungseinheit 24 auf. Die Kopplungseinheit 24 ist dazu vorgesehen, die weitere Antriebseinheit 30 mit der Spindeleinheit 84 zu koppeln. Die Kopplungseinheit 24 weist ein Formschlusskopplungselement 32 auf. Das Formschlusskopplungselement 32 ist der Spindeleinheit 84 zugeordnet. Das Formschlusskopplungselement 32 ist rotationsfest mit der Spindeleinheit 84 verbunden. Das Formschlusskopplungselement 32 ist als ein um die Spindelachse 20 der Spindeleinheit 84 zentriertes Zahnrad ausgebildet. Das Formschlusskopplungselement 32 ist als ein Stirnrad ausgebildet. Das Formschlusskopplungselement 32 weist eine Außenverzahnung 116 auf. Die Zähne der Außenverzahnung 116 des Formschlusskopplungselements 32 weisen in Radialrichtungen der Spindelachse 20 von der Spindelachse 20 weg. Die Kopplungseinheit 24 weist ein weiteres Formschlusskopplungselement 118 auf.

Das weitere Formschlusskopplungselement 118 ist der weiteren Antriebseinheit 30 zugeordnet. Das weitere Formschlusskopplungselement 118 ist rotationsfest mit einem Abtrieb der weiteren Antriebseinheit 30 verbunden. Das weitere Formschlusskopplungselement 118 ist als ein Stirnrad ausgebildet. Das weitere Formschlusskopplungselement 118 weist eine Außenverzahnung 120 auf. Die Außenverzahnung 120 des weiteren Formschlusskopplungselements 118 ist dazu vorgesehen, in einem gekoppelten Zustand der Kopplungseinheit 24 in eine Außenverzahnung 124 zumindest eines zusätzlichen weiteren Formschlusskopplungselements 126 der Werkzeugeinstell- und/oder Werkzeugmessgerätevorrichtung 44, insbesondere des Übersetzungsgetriebes 34, der Spindeleinheit 84 und/oder der weiteren Antriebseinheit 30, formschlüssig einzugreifen. In dem gekoppelten Zustand sind die Formschlusskopplungselemente 32, 118 dazu vorgesehen, das von der weiteren Antriebseinheit 30 und/oder dem Übersetzungsgetriebe 34 erzeugte Drehmoment an die Spindeleinheit 84 zu übertragen und insbesondere zu einem Spindeldrehmoment umzuwandeln. Die weitere Antriebseinheit 30 ist dazu vorgesehen, in dem gekoppelten Zustand der Kopplungseinheit 24 eine von der Antriebseinheit 22 im Wesentlichen unabhängige weitere Rotationsbewegung des Objekts 18, insbesondere des Werkzeugs 10 und/oder der Werkzeugaufnahme 14, zu erzeugen, wobei die Rotationsbewegung und die weitere Rotationsbewegung eine Rotation um dieselbe Spindelachse 20 umfassen.

Die Vorrichtung (44) für ein Werkzeugeinstell- und/oder Werkzeugmessgerät weist eine Halteeinheit 36 auf. Die Halteeinheit 36 ist dazu vorgesehen, die weitere Antriebseinheit 30 an der Trägereinheit 16 zu haltern. Die Trägereinheit 16 hält die weitere Antriebseinheit 30. Die Halteeinheit 36 ist an der Trägereinheit 16 befestigt. Die Halteeinheit 36 weist eine Lagereinheit 38 auf. Die Lagereinheit 38 ist dazu vorgesehen, die weitere Antriebseinheit 30 relativ zu der Spindeleinheit 84 beweglich zu lagern. Die Lagereinheit 38 weist eine Lagerschiene 122 auf. Die Lagerschiene 122 ist dazu vorgesehen, eine Bewegung der Antriebseinheit 30 relativ zu der Spindeleinheit 84 zu führen. Die Lagerschiene 122 bildet eine Linearführung aus. Die Lagereinheit 38 weist ein Lagerelement 40 auf. Das Lagerelement 40 ist dazu vorgesehen, die Bewegung der weiteren Antriebseinheit 30, insbesondere entlang der Lagerschiene 122, zu erzeugen. Das Lagerelement 40 ist als ein Hubelement 56, insbesondere ein Pneumatikzylinder, ausgebildet. Die Steuer- und/oder Regeleinheit 88 ist zumindest dazu vorgesehen, die Bewegung der weiteren Antriebseinheit 30 mittels des Lagerelements 40 und/oder die Funktion des Lagerelements 40 zu steuern und/oder zu regeln.

Die Kopplungseinheit 24 ist dazu vorgesehen, die Spindeleinheit 84 zu einer Änderung eines maximal erreichbaren Spindeldrehmoments in zumindest zwei differierenden Modi 26, 28 anzutreiben. Die Spindeleinheit 84 erzeugt in dem zweiten Modus 28 der beiden durch die Kopplungseinheit 24 erzeugbaren Modi 26, 28 ein wesentlich höheres maximales Spindeldrehmoment als in dem ersten Modus 26 der beiden durch die Kopplungseinheit 24 erzeugbaren Modi 26, 28. Eine Bewegung der weiteren Antriebseinheit 30 mittels der Lagereinheit 38 ist dazu vorgesehen, jeweils einen der beiden Modi 26, 28 zu aktivieren. In der Fig. 5 ist die Kopplungseinheit 24 in einer ersten Kopplungsstellung 48 gezeigt. In der ersten Kopplungsstellung 48 befindet sich die Kopplungseinheit 24 in dem entkoppelten Zustand. In der ersten Kopplungsstellung 48 ist die Spindeleinheit 84 in dem ersten Modus 26 angetrieben. In dem ersten Modus 26 ist die Spindeleinheit 84 ausschließlich von der Antriebseinheit 22 angetrieben. Der erste Modus 26 ist zu einer Präzisionspositionierung der Werkzeugaufnahme 14, insbesondere bei einem Einstell- und/oder Messvorgang des Werkzeugeinstell-und/oder Werkzeugmessgeräts 42 vorgesehen. In dem ersten Modus 26 ist die Spindeleinheit 84 leichtgängig und/oder manuell drehbar. In der ersten Kopplungsstellung 48 ist das weitere Formschlusskopplungselement 118 frei von einem Eingriff in andere Formschlusskopplungselemente. In der ersten Kopplungsstellung 48 befindet sich die weitere Antriebseinheit 30 in einer zweiten Endposition 80. In der ersten Kopplungsstellung 48 ist die weitere Antriebseinheit 30 von der Lagereinheit 38 in die zweite Endposition 80 verbracht.

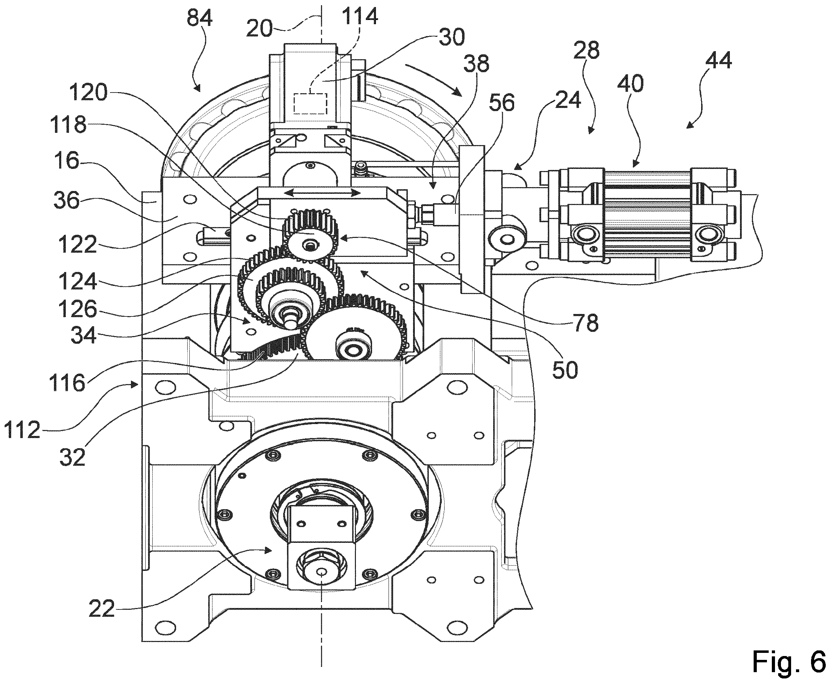

Die Fig. 6 zeigt eine weitere schematische perspektivische Ansicht des Teils des Werkzeugeinstell- und/oder Werkzeugmessgeräts 42 mit der Vorrichtung (44) für ein Werkzeugeinstell- und/oder Werkzeugmessgerät, in der die Kopplungseinheit 24 in einer zweiten Kopplungsstellung 50 gezeigt ist. In der zweiten Kopplungsstellung 50 befindet sich die Kopplungseinheit 24 in dem gekoppelten Zustand. In der zweiten Kopplungsstellung 50 ist die Spindeleinheit 84 in dem zweiten Modus 28 angetrieben. In dem zweiten Modus 28 ist die Spindeleinheit 84 alternativ zu der Antriebseinheit 22 oder zusätzlich zu der Antriebseinheit 22 von der weiteren Antriebseinheit 30 angetrieben. Der zweite Modus 28 ist zu einer Erzeugung eines Fixier- und/oder Lösedrehmoments zur Fixierung und/oder zum Lösen von Werkzeugen 10 in und/oder aus Werkzeugaufnahmen 14, insbesondere bei dem Werkzeugeinspann- und/oder Werkzeugausspannvorgang, vorgesehen. In dem zweiten Modus 28 ist die Spindeleinheit 84 nicht manuell drehbar. In dem zweiten Modus 28 ist die Spindeleinheit 84 mit verschiedenen Geschwindigkeiten, insbesondere mit einer ersten Geschwindigkeit zu einem Auf- und/oder Abschrauben einer Überwurfmutter 12 und mit einer zweiten Geschwindigkeit zu einem finalen Festziehen oder einem initialen Lösen der Überwurfmutter 12, drehbar. In der zweiten Kopplungsstellung 50 ist das weitere Formschlusskopplungselement 118 in einem Eingriff in zumindest ein anderes Formschlusskopplungselement, insbesondere das zusätzliche weitere Formschlusskopplungselement 126 des Übersetzungsgetriebes 34 oder das Formschlusskopplungselement 32. In der zweiten Kopplungsstellung 50 befindet sich die weitere Antriebseinheit 30 in einer ersten Endposition 78. In der zweiten Kopplungsstellung 50 ist die weitere Antriebseinheit 30 von der Lagereinheit 38 in die erste Endposition 78 verbracht. Das Lagerelement 40 ist dazu vorgesehen, die weitere Antriebseinheit 30 zwischen der ersten Endposition 78 und der zweiten Endposition 80 hin- und herzubewegen.

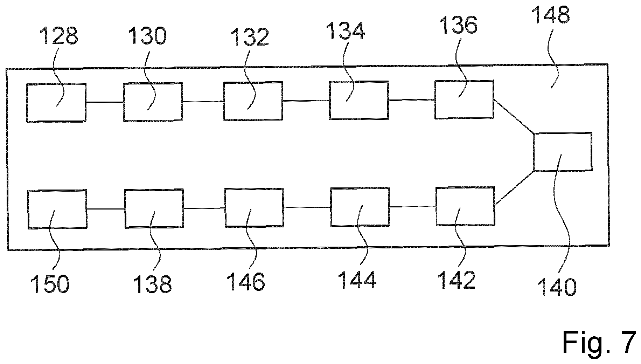

In der Fig. 7 ist ein schematisches Ablaufdiagramm eines Verfahrens 148 zum Betrieb der Vorrichtung (44) für ein Werkzeugeinstell- und/oder Werkzeugmessgerät gezeigt, wobei das Werkzeug 10 mittels eines Festziehens der Überwurfmutter 12 der Werkzeugaufnahme 14 in die Werkzeugaufnahme 14 eingespannt und/oder mittels eines Lösens der Überwurfmutter 12 aus der Werkzeugaufnahme 14 ausgespannt wird. In dem Verfahren 148 wird die Spindeleinheit 84 abhängig von der Kopplungsstellung 48, 50 der Kopplungseinheit 24 zu einer Änderung eines maximal erreichbaren Spindeldrehmoments, insbesondere zu einem Erreichen eines erforderlichen Spann- und/oder Lösedrehmoments zu einem Spannen oder Lösen der Überwurfmutter 12, in zwei differierenden Modi 26, 28 angetrieben.

Zu dem automatisierten Einspannen des Werkzeugs 10 in die Werkzeugaufnahme 14 wird in zumindest einem Verfahrensschritt 128 das Spannelement 92 von dem Handhabungsroboter 76 aufgenommen und auf die Werkzeugaufnahme 14, in die ein Werkzeug 10 eingesteckt ist, aufgesetzt. In zumindest einem weiteren Verfahrensschritt 130 wird das Spannelement 92 mit der Überwurfmutter 12 des Werkzeugaufnahme 14 verklemmt. In zumindest einem weiteren Verfahrensschritt 132 wird das Drehmomentaufnahmeelement 100 durch die vertikale Verstelleinheit 102 verfahren, insbesondere abgesenkt. In zumindest einem weiteren Verfahrensschritt 134 wird das Drehmomentaufnahmeelement 100 so weit durch die vertikale Verstelleinheit 102 abgesenkt, dass das Drehmomentübertragungselement 98 des Drehmomentaufnahmeelements 100 mit dem Drehmomentübertragungselement 62 des Spannelements 92 drehfest gekoppelt wird. In zumindest einem weiteren Verfahrensschritt 136 wird das Umschaltelement 96 des Spannelements 92 mittels des Betätigungselements 104 des Drehmomentaufnahmeelements 100 derart geschaltet, dass die Überwurfmutter 12 und das Spannelement 92 in einer Rotationsrichtung, welche dazu vorgesehen ist, die Überwurfmutter 12 festzuziehen, rotationsfest miteinander gekoppelt sind. In zumindest einem weiteren Verfahrensschritt 140 wird die erste Kopplungsstellung 48 von der Kopplungseinheit 24 eingenommen. In dem Verfahrensschritt 140 wird die weitere Antriebseinheit 30 von der Lagereinheit 38 in die zweite Endposition 80 verbracht. In dem Verfahrensschritt 140 wird die weitere Antriebseinheit 30 von dem Lagerelement 40 in die zweite Endposition 80 gefahren. In dem Verfahrensschritt 140 wird eine Formschlussverbindung des weiteren Formschlusskopplungselements 118 getrennt. In zumindest einem weiteren Verfahrensschritt 142 wird die Überwurfmutter 12 der Werkzeugaufnahme 14 durch eine, insbesondere schnelle, Rotation der Spindeleinheit 84 um die Spindelachse 20 auf die Werkzeugaufnahme 14 geschraubt. In dem Verfahrensschritt 142 wird die Überwurfmutter 12 auf ein erstes Grenzdrehmoment angezogen. In dem Verfahrensschritt 142 wird die Spindeleinheit 84 von der Antriebseinheit 22 in dem ersten Modus 26 angetrieben. Bei dem Anziehen der Überwurfmutter 12 auf das erste Grenzdrehmoment wird das momentane Drehmoment von der Steuer-und/oder Regeleinheit 88 der Werkzeugspanneinheit 46 überwacht. Das erste Grenzdrehmoment wird von der Steuer- und/oder Regeleinheit 88 vorgegeben. Dabei ist denkbar, dass das erste Grenzdrehmoment im Vorfeld durch einen Bediener in die Steuer- und/oder Regeleinheit 88 händisch oder zumindest teilautomatisiert eingegeben wird. In zumindest einem weiteren Verfahrensschritt 144 wird das mit dem ersten Grenzdrehmoment voreingespannte Werkzeug 10 mittels des Werkzeugeinstell- und/oder Werkzeugmessgeräts 42 vermessen und/oder eingestellt, insbesondere auf Länge vermessen und eingestellt.

In zumindest einem weiteren Verfahrensschritt 146 wird die zweite Kopplungsstellung 50 von der Kopplungseinheit 24 eingenommen. In dem Verfahrensschritt 146 wird die weitere Antriebseinheit 30 von der Lagereinheit 38 in die erste Endposition 78 verbracht. In dem Verfahrensschritt 146 wird die weitere Antriebseinheit 30 von dem Lagerelement 40 in die erste Endposition 78 gefahren. In dem Verfahrensschritt 146 wird eine Formschlussverbindung des weiteren Formschlusskopplungselements 118 hergestellt. In dem Verfahrensschritt 146 wird bei dem Kopplungsvorgang der Kopplungseinheit 24, bei dem die weitere Antriebseinheit 30 mit der Spindeleinheit 84 gekoppelt wird, die Spindeleinheit 84 durch die Antriebseinheit 22 der Spindeleinheit 84 mit einer geringen Rotationsgeschwindigkeit rotiert. In zumindest einem weiteren Verfahrensschritt 138 wird die Überwurfmutter 12 der Werkzeugaufnahme 14 mittels einer Rotation der Spindeleinheit 84 auf ein zweites Grenzdrehmoment, insbesondere auf ein Spanndrehmoment, angezogen. Das zweite Grenzdrehmoment ist hierbei um ein Vielfaches größer als das erste Grenzdrehmoment. In dem Verfahrensschritt 138 wird die Spindeleinheit 84 anstatt von der Antriebseinheit 22 oder zusätzlich zu der Antriebseinheit 22 von der weiteren Antriebseinheit 30 angetrieben, insbesondere gedreht. In dem Verfahrensschritt 146 wird die Spindeleinheit 84 in dem zweiten Modus 28 angetrieben. Bei dem Anziehen der Überwurfmutter 12 auf das zweite Grenzdrehmoment wird das momentane Drehmoment von der Steuer- und/oder Regeleinheit 88 der Werkzeugspanneinheit 46 überwacht. Das zweite Grenzdrehmoment wird von der Steuer- und/oder Regeleinheit 88 vorgegeben. Dabei ist denkbar, dass das zweite Grenzdrehmoment im Vorfeld durch einen Bediener in die Steuer- und/oder Regeleinheit 88 händisch oder zumindest teilautomatisiert eingegeben wird. Alternativ oder zusätzlich ist denkbar, dass mittels der optischen Messeinrichtung 54 eine Bewegung einer Markierung auf der Überwurfmutter 12 und/oder auf dem Grundkörper 86 der Werkzeugaufnahme 14 zur Einstellung des zweiten Grenzdrehmoments überwacht wird. Dazu kann beispielsweise eine Deckungsgleichheit zweier Markierungen auf gegeneinander rotierten Teilen der Werkzeugaufnahme 14 überwacht werden. In zumindest einem weiteren Verfahrensschritt 150 wird die Klemmung des Spannelements 92 mit der Überwurfmutter 12 gelöst und das Spannelement 92 wird von der Werkzeugaufnahme 14 durch den Handhabungsroboter 76 abgenommen. Ein automatisiertes Ausspannen des Werkzeugs 10 aus der Werkzeugaufnahme 14 verläuft vergleichbar zu dem oben beschriebenen Verfahren 148, jedoch wird die Spindeleinheit 84 in die umgekehrte Rotationsrichtung betrieben, wobei die Spindeleinheit 84 zunächst in dem zweiten Modus 28 mit einem erhöhten Spindeldrehmoment zu einem initialen Lösen der Spannkraft der Überwurfmutter 12 und anschließend in dem ersten Modus 26 zum kompletten Abschrauben der Überwurfmutter 12 betrieben wird. Weitere Details zu dem Ausspannverfahren sind zudem in einer deutschen Patentanmeldung mit der Anmeldenummer 10 2018 116 263.4 beschrieben.

### Bezugszeichen

- 10: Werkzeug
- 12: Überwurfmutter
- 14: Werkzeugaufnahme
- 16: Trägereinheit
- 18: Objekt
- 20: Spindelachse
- 22: Antriebseinheit
- 24: Kopplungseinheit
- 26: Erster Modus
- 28: Zweiter Modus
- 30: Weitere Antriebseinheit
- 32: Formschlusskopplungselement
- 34: Übersetzungsgetriebe
- 36: Halteeinheit
- 38: Lagereinheit
- 40: Lagerelement
- 42: Werkzeugeinstell- und/oder Werkzeugmessgerät
- 44: Vorrichtung für ein Werkzeugeinstell- und/oder Werkzeugmessgerät
- 46: Werkzeugspanneinheit
- 48: Erste Kopplungsstellung
- 50: Zweite Kopplungsstellung
- 52: Messturm
- 54: optische Messeinrichtung
- 56: Hubelement
- 58: Winkelsensoreinheit
- 60: Greifereinheit
- 62: Korrespondierendes Drehmomentübertragungselement
- 64: Klemmelement
- 66: Klemmbereich
- 68: Halteelement
- 70: Verbindungsmechanismus
- 72: Ausnehmung
- 74: Werkzeugaufnahmeöffnung
- 76: Handhabungsroboter
- 78: Endposition
- 80: Endposition
- 82: Messtisch
- 84: Spindeleinheit
- 86: Grundkörper
- 88: Steuer- und/oder Regeleinheit
- 90: Vorsatzhalter
- 92: Spannelement
- 94: Wandung
- 96: Umschaltelement
- 98: Drehmomentübertragungselement
- 100: Drehmomentaufnahmeelement
- 102: Verstelleinheit
- 104: Betätigungselement
- 106: Drehmomentsensor
- 108: Antriebsmotor
- 110: Antriebswelle
- 112: Drehmomenterzeugungseinheit
- 114: Weiterer Antriebsmotor
- 116: Außenverzahnung
- 118: Weiteres Formschlusskopplungselement
- 120: Außenverzahnung
- 122: Lagerschiene
- 124: Außenverzahnung
- 126: Zusätzliches weiteres Formschlusskopplungselement
- 128: Verfahrensschritt
- 130: Verfahrensschritt
- 132: Verfahrensschritt
- 134: Verfahrensschritt
- 136: Verfahrensschritt
- 138: Verfahrensschritt
- 140: Verfahrensschritt
- 142: Verfahrensschritt
- 144: Verfahrensschritt
- 146: Verfahrensschritt
- 148: Verfahren
- 150: Verfahrensschritt
- 152: Spannzange

## Patentansprüche

1. Vorrichtung (44) für ein Werkzeugeinstell- und/oder Werkzeugmessgerät, mit einer Trägereinheit (16) und mit einer von der Trägereinheit (16) getragenen Spindeleinheit (84), insbesondere Motorspindeleinheit, welche zumindest zu einer Rotation eines in die Spindeleinheit (84) eingesetzten Objekts (18), insbesondere eines Werkzeugs (10) und/oder einer Werkzeugaufnahme (14), um eine Spindelachse (20) der Spindeleinheit (84) vorgesehen ist, und welche zumindest eine Antriebseinheit (22) zu einer Erzeugung der Rotationsbewegung des Objekts (18) aufweist, **gekennzeichnet durch** eine von der Antriebseinheit (22) getrennt und/oder verschieden ausgebildete weitere Antriebseinheit (30) und eine Halteeinheit (36), welche dazu vorgesehen ist, die weitere Antriebseinheit (30) an der Trägereinheit (16) zu haltern, wobei die Halteeinheit (36) eine Lagereinheit (38) umfasst, welche dazu vorgesehen ist, die weitere Antriebseinheit (30) beweglich zu lagern, wobei die Spindeleinheit (84) eine Kopplungseinheit (24) aufweist, welche dazu vorgesehen ist, die Spindeleinheit (84), insbesondere zu einer Änderung eines maximal erreichbaren Spindeldrehmoments, in zumindest zwei differierenden Modi (26, 28) anzutreiben und wobei eine Bewegung der weiteren Antriebseinheit (30) mittels der Lagereinheit (38) dazu vorgesehen ist, jeweils einen der beiden Modi (26, 28) zu aktivieren.

2. Vorrichtung (44) für ein Werkzeugeinstell- und/oder Werkzeugmessgerät nach Anspruch 1, **dadurch gekennzeichnet, dass** die Spindeleinheit (84) in einem zweiten Modus (28) der beiden durch die Kopplungseinheit (24) erzeugbaren Modi (26, 28) ein wesentlich höheres maximales Spindeldrehmoment erzeugt als in einem ersten Modus (26) der beiden durch die Kopplungseinheit (24) erzeugbaren Modi (26, 28).

3. Vorrichtung (44) für ein Werkzeugeinstell- und/oder Werkzeugmessgerät nach Anspruch 1 oder 2, **dadurch gekennzeichnet, dass** die Kopplungseinheit (24) dazu vorgesehen ist, die weitere Antriebseinheit (30) mit der Spindeleinheit (84) zu koppeln.

4. Vorrichtung (44) für ein Werkzeugeinstell- und/oder Werkzeugmessgerät nach einem der vorhergehenden Ansprüche, **dadurch gekennzeichnet, dass** die Kopplungseinheit (24) ein Formschlusskopplungselement (32) umfasst.

5. Vorrichtung (44) für ein Werkzeugeinstell- und/oder Werkzeugmessgerät nach Anspruch 4, **dadurch gekennzeichnet, dass** das Formschlusskopplungselement (32) als ein um die Spindelachse (20) zentriertes Zahnrad ausgebildet ist.

6. Vorrichtung (44) für ein Werkzeugeinstell- und/oder Werkzeugmessgerät nach einem der Ansprüche 1 bis 5, **dadurch gekennzeichnet, dass** die weitere Antriebseinheit (30) zumindest dazu vorgesehen ist, in einem gekoppelten Zustand der Kopplungseinheit (24) eine von der Antriebseinheit (22) zumindest im Wesentlichen unabhängige weitere Rotationsbewegung des Objekts (18) zu erzeugen, wobei die Rotationsbewegung und die weitere Rotationsbewegung eine Rotation um dieselbe Spindelachse (20) umfasst.

7. Vorrichtung (44) für ein Werkzeugeinstell- und/oder Werkzeugmessgerät nach einem der Ansprüche 1 bis 6, **dadurch gekennzeichnet, dass** die weitere Antriebseinheit (30) ein Übersetzungsgetriebe (34) aufweist.

8. Vorrichtung (44) für ein Werkzeugeinstell- und/oder Werkzeugmessgerät nach Anspruch 1, **dadurch gekennzeichnet, dass** die Lagereinheit (38) ein Lagerelement (40) umfasst, welches dazu vorgesehen ist, eine Bewegung der weiteren Antriebseinheit (30) zumindest teilautomatisiert zu erzeugen.

9. Werkzeugeinstell- und/oder Werkzeugmessgerät (42) mit einer Vorrichtung (44) für ein Werkzeugeinstell- und/oder Werkzeugmessgerät nach einem der vorhergehenden Ansprüche.

10. Werkzeugeinstell- und/oder Werkzeugmessgerät (42) nach Anspruch 9, **gekennzeichnet durch** eine Werkzeugspanneinheit (46) zu einem Ein-und/oder Ausspannen von Werkzeugen (10) in/aus in der Spindeleinheit (84) aufgenommenen Werkzeugaufnahmen (14) mit Überwurfmuttern (12), wobei die Werkzeugspanneinheit (46) dazu vorgesehen ist, mittels einer Rotation der Spindeleinheit (84) um die Spindelachse (20) die Überwurfmuttern (12) festzudrehen oder zu lösen.

11. Verfahren zum Betrieb einer Vorrichtung (44) für ein Werkzeugeinstell-und/oder Werkzeugmessgerät, insbesondere nach einem der Ansprüche 1 bis 8, mit einer Trägereinheit (16) und mit einer von der Trägereinheit (16) getragenen Spindeleinheit (84), insbesondere Motorspindeleinheit, mittels welcher zumindest ein in die Spindeleinheit (84) eingesetztes Objekt (18), insbesondere ein Werkzeug (10) und/oder eine Werkzeugaufnahme (14), um eine Spindelachse (20) der Spindeleinheit (84) rotiert wird, und welche zumindest eine Antriebseinheit (22) zu einer Erzeugung der Rotationsbewegung des Objekts (18) aufweist, **gekennzeichnet durch** eine von der Antriebseinheit (22) getrennt und/oder verschieden ausgebildete weitere Antriebseinheit (30) und eine Halteeinheit (36), welche die weitere Antriebseinheit (30) an der Trägereinheit (16) haltert, wobei die Halteeinheit (36) eine Lagereinheit (38) umfasst, welche die weitere Antriebseinheit (30) beweglich lagert, wobei die Spindeleinheit (84) eine Kopplungseinheit (24) aufweist und die Spindeleinheit (84) abhängig von einer Kopplungsstellung der Kopplungseinheit (24) zu einer Änderung eines maximal erreichbaren Spindeldrehmoments, insbesondere zu einem Erreichen eines erforderlichen Spann- und/oder Lösedrehmoments zu einem Spannen oder Lösen einer Überwurfmutter (12) einer Werkzeugaufnahme (14), in zwei differierenden Modi (26, 28) angetrieben wird und wobei jeweils einer der beiden Modi (26, 28) durch eine Bewegung der weiteren Antriebseinheit (30) mittels der Lagereinheit (38) aktiviert wird.

12. Verfahren nach Anspruch 11, **dadurch gekennzeichnet, dass** die Kopplungseinheit (24) zumindest zwei Kopplungsstellungen (48, 50) aufweist, wobei in einer ersten Kopplungsstellung (48) die Spindeleinheit (84) von einer Antriebseinheit (22) in dem ersten Modus (26) angetrieben wird und wobei in einer zweiten Kopplungsstellung (50) die Spindeleinheit (84) alternativ zu der Antriebseinheit (22) oder zusätzlich zu der Antriebseinheit (22) von einer von der Antriebseinheit (22) getrennt und/oder verschieden ausgebildeten weiteren Antriebseinheit (30) in dem zweiten Modus (28) angetrieben wird.

13. Verfahren nach Anspruch 12, **dadurch gekennzeichnet, dass** bei einem Kopplungsvorgang der Kopplungseinheit (24), bei dem die weitere Antriebseinheit (30) mit der Spindeleinheit (84) gekoppelt wird, die Spindeleinheit (84) durch die Antriebseinheit (22) mit einer geringen Rotationsgeschwindigkeit rotiert wird.

## Claims

1. Device (44) for a tool presetting and/or tool measuring apparatus
with a carrier unit (16)
and with a spindle unit (84), in particular a motor spindle unit, which is supported by the carrier unit (16), which is at least configured for a rotation of an object (18) inserted in the spindle unit (84), in particular a tool (10) and/or a tool holder (14) inserted in the spindle unit (84), around a spindle axis (20) of the spindle unit (84), and which comprises at least one drive unit (22) for generating the rotational movement of the object (18),
**characterised by** a further drive unit (30) which is realized separately and/or different from the drive unit (22)
and by a holding unit (36) which is configured for holding the further drive unit (30) at the carrier unit (16),
the holding unit (36) comprising a bearing unit (38) which is configured to movably support the further drive unit (30),
the spindle unit (84) comprising a coupling unit (24) which is configured to drive the spindle unit (84) in at least two differing modes (26, 28), in particular for changing a maximally achievable spindle torque, and
a movement of the further drive unit (30) by the bearing unit (38) being configured to activate respectively one of the two modes (26, 28).

2. Device (44) for a tool presetting and/or tool measuring apparatus according to claim 1,
**characterised in that** the spindle unit (84) generates an essentially higher maximum spindle torque in a second mode (28) of the two modes (26, 28) that can be generated by the coupling unit (24) than in a first mode (26) of the two modes (26, 28) that can be generated by the coupling unit (24).

3. Device (44) for a tool presetting and/or tool measuring apparatus according to claim 1 or 2,
**characterised in that** the coupling unit (24) is configured to couple the further drive unit (30) with the spindle unit (84).

4. Device (44) for a tool presetting and/or tool measuring apparatus according to one of the preceding claims,
**characterised in that** the coupling unit (24) comprises a form-fitting coupling element (32).

5. Device (44) for a tool presetting and/or tool measuring apparatus according to claim 4,
**characterised in that** the form-fitting coupling element (32) is embodied as a gear wheel which is centered around the spindle axis (20).

6. Device (44) for a tool presetting and/or tool measuring apparatus according to one of claims 1 to 5,
**characterised in that** the further drive unit (30) is at least configured, in a coupled state of the coupling unit (24), to generate a further rotational movement of the object (18), which is at least substantially independent from the drive unit (22), the rotational movement and the further rotational movement comprising a rotation around the same spindle axis (20).

7. Device (44) for a tool presetting and/or tool measuring apparatus according to one of claims 1 to 6,
**characterised in that** the further drive unit (30) comprises a transmission gear (24).

8. Device (44) for a tool presetting and/or tool measuring apparatus according to claim 1,
**characterised in that** the bearing unit (38) comprises a bearing element (40) which is configured to generate a movement of the further drive unit (30) in an at least semi-automated manner.

9. Tool presetting and/or tool measuring apparatus (42) with a device (44) for a tool presetting and/or tool measuring apparatus according to one of the preceding claims.

10. Tool presetting and/or tool measuring apparatus (42) according to claim 9,
**characterised by** a tool clamping unit (46) for a clamping-in and/or clamping-out of tools (10) into/from tool holders (14) with union nuts (12), which are accommodated in the spindle unit (84),
the tool clamping unit (46) being configured for a tightening or releasing of the union nuts (12) by a rotation of the spindle unit (84) around the spindle axis (20).

11. Method for operating a device (44) for a tool presetting and/or tool measuring apparatus, in particular according to one of claims 1 to 8,
with a carrier unit (16)
and with a spindle unit (84), in particular a motor spindle unit, which is supported by the carrier unit (16), by means of which at least one object (18), in particular a tool (10) and/or a tool holder (14), inserted in the spindle unit (84) is rotated around a spindle axis (20) of the spindle unit (84) and which comprises at least one drive unit (22) for generating the rotational movement of the object (18),
**characterised by** a further drive unit (30), which is realized separately and/or differently from the drive unit (22), and by a holding unit (36) which holds the further drive unit (30) at the carrier unit (16),
wherein the holding unit (36) comprises a bearing unit (38) which supports the further drive unit (30) movably,
wherein the spindle unit (84) comprises a coupling unit (24) and
wherein, for changing a maximally achievable spindle torque, in particular for achieving a clamping and/or releasing torque required for clamping or releasing a union nut (12) of a tool holder (14), the spindle unit (84) is driven - depending on a coupling position of the coupling unit (24) - in two differing modes (26, 28), and
wherein respectively one of the two modes (26, 28) is activated by a movement of the further drive unit (30) by means of the bearing unit (38).

12. Method according to claim 11,
**characterised in that** the coupling unit (24) has at least two coupling positions (48, 50), wherein in a first coupling position (48) the spindle unit (84) is driven by a drive unit (22) in the first mode (26) and wherein in a second coupling position (50) the spindle unit (84) is driven - alternatively to the drive unit (22) or in addition to the drive unit (22) - by a further drive unit (30), which is realized separately and/or differently from the drive unit (22), in the second mode (28).

13. Method according to claim 12,
**characterised in that** in a coupling process of the coupling unit (24), in which the further drive unit (30) is coupled with the spindle unit (84), the spindle unit (84) is rotated by the drive unit (22) at a low rotation speed.

## Revendications

1. Dispositif (44) pour un appareil de réglage d'outil et/ou de mesure d'outil,
avec une unité porteuse (16)
et avec une unité de broche (84), en particulier une unité de broche motorisée, qui est supportée par l'unité porteuse (16), qui est prévue au moins pour une rotation d'un objet (18), en particulier d'un outil (10) et/ou d'un logement d'outil (14), inséré dans l'unité de broche (84) autour d'un arbre de broche (20) de l'unité de broche (84) et qui comporte au moins une unité d'entraînement (22) pour générer le mouvement rotatif de l'objet (18),
**caractérisé par** une autre unité d'entraînement (30) réalisée séparément et/ou différemment de l'unité d'entraînement (22) et par une unité rétentrice (36) prévue pour retenir l'autre unité d'entraînement (30) sur l'unité porteuse (16),
où l'unité rétentrice (36) comprend une unité de palier (38) prévue pour mouvable-ment supporter l'autre unité d'entraînement (30),
où l'unité de broche (84) comprend une unité de couplage (24) prévue pour entraîner l'unité de broche (84) en au moins deux modes différants (26, 28), en particulier pour un changement d'un couple de broche maximalement atteignable,
et où un mouvement de l'autre unité d'entraînement (30) par l'unité de palier (38) est prévu pour activer respectivement un des deux modes (26, 28).

2. Dispositif (44) pour un appareil de réglage d'outil et/ou de mesure d'outil selon la revendication 1,
**caractérisé en ce que** dans un deuxième mode (28) des deux modes (26, 28) qui peuvent être générés par l'unité de couplage (24) l'unité de broche (84) génère un couple de broche maximal qui est sensiblement supérieur à un couple de broche maximal d'un premier mode (26) des deux modes (26, 28) qui peuvent être générés par l'unité de couplage (24).

3. Dispositif (44) pour un appareil de réglage d'outil et/ou de mesure d'outil selon la revendication 1 ou 2,
**caractérisé en ce que** l'unité de couplage (24) est prévue pour coupler l'autre unité d'entraînement (30) avec l'unité de broche (84).

4. Dispositif (44) pour un appareil de réglage d'outil et/ou de mesure d'outil selon l'une des revendications précédentes,
**caractérisé en ce que** l'unité de couplage (24) comprend un élément de couplage à liaison en forme (32).

5. Dispositif (44) pour un appareil de réglage d'outil et/ou de mesure d'outil selon la revendication 4,
**caractérisé en ce que** l'élément de couplage à liaison en forme (32) est réalisé comme roue dentée centrée autour de l'abrbre de broche (20).

6. Dispositif (44) pour un appareil de réglage d'outil et/ou de mesure d'outil selon l'une des revendications 1 à 5,
**caractérisé en ce que** l'autre unité d'entraînement (30) est au moins prévue pour générer, en état couplé de l'unité de couplage (24), un autre mouvement rotatif de l'objet (18) qui est au moins sensiblement indépendant de l'unité d'entraînement (22), le mouvement rotatif et l'autre mouvement rotatif comprenant une rotation autour du même arbre de broche (20).

7. Dispositif (44) pour un appareil de réglage d'outil et/ou de mesure d'outil selon l'une des revendications 1 à 6,
**caractérisé en ce que** l'autre unité d'entraînement (30) comprend un engrenage de transmission (34).

8. Dispositif (44) pour un appareil de réglage d'outil et/ou de mesure d'outil selon la revendication 1,
**caractérisé en ce que** l'unité de palier (38) comprend un élément de palier (40) prévu pour générer un mouvement de l'autre unité d'entraînement (30) de façon au moins semi-automatisée.

9. Appareil de réglage d'outil et/ou de mesure d'outil (42) avec un dispositif (44) pour un appareil de réglage d'outil et/ou de mesure d'outil selon l'une des revendications précédentes.

10. Appareil de réglage d'outil et/ou de mesure d'outil (42) selon la revendication 9, **caractérisé par** une unité à serrage d'outil (46) pour un enserrage et/ou désserrage des outils (10) dans/des logements d'outil (14) reçues dans l'unité de broche (84) avec des écrous-raccord (12),
l'unité à serrage d'outil (46) étant prévue pour serrer ou désserrer les écrous-raccord (12) par une rotation de l'unité de broche (84) autour de l'arbre de broche (20).

11. Procédé en fonctionnement d'un dispositif (44) pour un appareil de réglage d'outil et/ou de mesure d'outil, en particulier selon l'une des revendications 1 à 8,
avec une unité porteuse (16)
et avec une unité de broche (84), en particulier une unité de broche motorisée, supportée par l'unité porteuse (16),
par le biais de laquelle au moins un objet (18) inséré dans l'unité de broche (84), en particulier un outil (10) et/ou un logement d'outil (14) inséré dans l'unité de broche (84), est tourné autour d'un arbre de broche (20) de l'unité de broche (84)
et qui comporte au moins une unité d'entraînement (22) pour générer le mouvement rotatif de l'objet (18),
**caractérisé par** une autre unité d'entraînement (30) réalisée séparément et/ou différemment de l'unité d'entraînement (22) et par une unité rétentrice (36) retenant l'autre unité d'entraînement (30) sur l'unité porteuse (16),
où l'unité rétentrice (36) comprend une unité de palier (38) supportant l'autre unité d'entraînement (30) mouvablement,
où l'unité de broche (84) comprend une unité de couplage (24)
et, pour un changement d'un couple de broche maximalement atteignable, en particulier pour atteindre un couple de serrage et/ou désserrage requis pour un serrage ou désserrage d'un écrou-raccord (12) d'un logement d'outil (14), l'unité de broche (84) est entraînée, en fonction d'une position de couplage de l'unité de couplage (24), en deux modes différants (26, 28) et
où respectivement l'un des deux modes (26, 28) est activé par un mouvement de l'autre unité d'entraînement (30) par le biais de l'unité de palier (38).

12. Procédé selon la revendication 11,
**caractérisé en ce que** l'unité de couplage (24) comporte au moins deux positions de couplage (48, 50),
où dans une première position de couplage (48) l'unité de broche (84) est entraînée par une unité d'entraînement (22) en premier mode (26) et
où dans une deuxième position de couplage (50) l'unité de broche (84) est entraînée - alternativement à l'unité d'entraînement (22) ou en plus de l'unité d'entraînement (22) - en deuxième mode (28) par une autre unité d'entraînement (30), qui est réalisée séparément ou différemment de l'unité d'entraînement (22)..

13. Procédé selon la revendication 12,
**caractérisé en ce que** dans un procès de couplage de l'unité de couplage (24), dans lequel l'autre unité d'entraînement (30) est couplée avec l'unité de broche (84), l'unité de broche (84) est tournée par l'unité d'entraînement (22) à basse vitesse rotative.
